(19) Europäisches Patentamt
European Patent Office
Office européen des brevets

(11) EP 4 579 576 A1

(12) EUROPEAN PATENT APPLICATION
published in accordance with Art. 153(4) EPC

(43) Date of publication:
**02.07.2025 Bulletin 2025/27**

(21) Application number: **23857124.4**

(22) Date of filing: **31.07.2023**

(51) International Patent Classification (IPC):
***G06T 1/40*** (2006.01) ***G01J 3/36*** (2006.01)
***G06N 20/00*** (2019.01) ***H04N 23/60*** (2023.01)

(52) Cooperative Patent Classification (CPC):
**G01J 3/36; G06N 20/00; G06T 1/20; H04N 23/60**

(86) International application number:
**PCT/JP2023/027993**

(87) International publication number:
**WO 2024/043009 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.08.2022 JP 2022134391**

(71) Applicant: **Panasonic Intellectual Property Management Co., Ltd.**
**Kadoma-shi, Osaka 571-0057 (JP)**

(72) Inventor: **NODA Akihiro**
**Kadoma-shi, Osaka 571-0057 (JP)**

(74) Representative: **Grünecker Patent- und Rechtsanwälte**
**PartG mbB**
**Leopoldstraße 4**
**80802 München (DE)**

# (54) SIGNAL PROCESSING METHOD AND SIGNAL PROCESSING DEVICE

(57) A signal processing method performed by using a computer includes acquiring a compressed image including compressed information of a subject; acquiring a first parameter group and a reconstruction matrix used in first reconstruction processing for generating a reconstruction target image from the compressed image; generating the reconstruction target image on the basis of the compressed image, the first parameter group, and the reconstruction matrix; acquiring a second parameter group used in second reconstruction processing for generating a reconstructed image from the compressed image; generating the reconstructed image on the basis of the compressed image, the second parameter group, and the reconstruction matrix; and correcting the second parameter group on the basis of the reconstruction target image and the reconstructed image.

FIG. 1

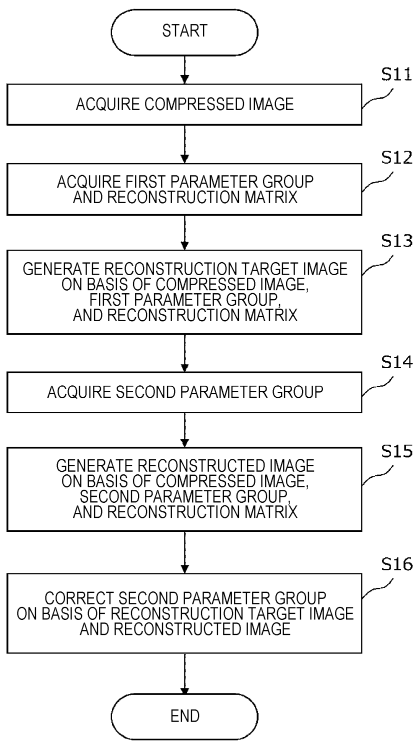


EP 4 579 576 A1

## Description

Technical Field

The present disclosure relates to a signal processing method and a signal processing apparatus.

Background Art

Compressed sensing is a technique for generating a larger number of data than observed data by assuming that a data distribution of an observation target is sparse in a certain space (e.g., a frequency space). The compressed sensing is applicable to an imaging system that generates an image including more information from a small number of observed data. In a case where the compressed sensing is applied to an imaging system, an optical filter having a function of coding an image of light in terms of space and wavelength can be used, for example. Such an imaging system can acquire a compressed image by imaging a subject through the optical filter and generate a reconstructed image including more information than the compressed image by computation. This can obtain various effects such as increase of resolution and the number of wavelengths of an image, shortening of an imaging time, and higher sensitivity.

Patent Literature 1 discloses an example of applying a compressed sensing technique to a hyperspectral camera that acquires images of wavelength bands each having a narrow bandwidth. According to the technique disclosed in Patent Literature 1, it is possible to generate a high-resolution and multiwavelength hyperspectral image.

Patent Literature 2 discloses a super-resolution method for generating a high-resolution image from a small number of observation information by using a compressed sensing technique.

Patent Literature 3 discloses a method for generating an image of higher resolution than an acquired image by applying convolutional neural network (CNN) to the acquired image.

Citation List

Patent Literature

PTL 1: U.S. Patent No. 9599511
PTL 2: Japanese Unexamined Patent Application Publication No. 2017-208641
PTL 3: U.S. Patent Application Publication No. 2019/0340497

Summary of Invention

The present disclosure provides a technique of increasing efficiency and performance of processing for generating a reconstructed image including more information from a compressed image.

A method according to an aspect of the present disclosure is a signal processing method executed by using a computer. The method includes acquiring a compressed image including compressed information of a subject; acquiring a first parameter group and a reconstruction matrix used in first reconstruction processing for generating a reconstruction target image from the compressed image; generating the reconstruction target image on the basis of the compressed image, the first parameter group, and the reconstruction matrix; acquiring a second parameter group used in second reconstruction processing for generating a reconstructed image from the compressed image; generating the reconstructed image on the basis of the compressed image, the second parameter group, and the reconstruction matrix; and correcting the second parameter group on the basis of the reconstruction target image and the reconstructed image.

It should be noted that general or specific aspects of the present disclosure may be implemented as a system, an apparatus, a method, an integrated circuit, a computer program, a computer-readable storage medium such as a storage disc, or any selective combination thereof. Examples of the computer-readable storage medium may include a volatile storage medium and a non-volatile storage medium such as a compact disc-read only memory (CD-ROM). The apparatus may include one or more apparatuses. In a case where the apparatus includes two or more apparatuses, the two or more apparatuses may be disposed in one piece of equipment or may be separately disposed in two or more separate pieces of equipment. In the specification and claims, the "apparatus" can mean not only a single apparatus, but also a system including apparatuses.

According to the technique of the present disclosure, it is possible to increase efficiency and performance of processing for generating a reconstructed image including more information from a compressed image.

Brief Description of Drawings

[Fig. 1] Fig. 1 is a flowchart illustrating a signal processing method according to an embodiment of the present disclosure.

[Fig. 2A] Fig. 2A schematically illustrates an example of a configuration of an imaging system.

[Fig. 2B] Fig. 2B illustrates an example of a configuration of an imaging device in which a filter array is disposed away from an image sensor.

[Fig. 2C] Fig. 2C illustrates another example of a configuration of an imaging device in which a filter array is disposed away from an image sensor.

[Fig. 2D] Fig. 2D illustrates still another example of a configuration of an imaging device in which a filter array is disposed away from an image sensor.

[Fig. 3A] Fig. 3A schematically illustrates an example of a filter array.

[Fig. 3B] Fig. 3B illustrates an example of a spatial distribution of transmittance of light in each of wavelength bands included in a target wavelength region.

[Fig. 3C] Fig. 3C illustrates an example of spectral transmittance in a region A1 included in the filter array illustrated in Fig. 3A.

[Fig. 3D] Fig. 3D illustrates an example of spectral transmittance of a region A2 included in the filter array illustrated in Fig. 3A.

[Fig. 4A] Fig. 4A is a diagram for explaining an example of a relationship between a target wavelength region W and wavelength bands $W_1$, $W_2$, ..., $W_N$ included in the target wavelength region W.

[Fig. 4B] Fig. 4B is a diagram for explaining another example of a relationship between a target wavelength region W and wavelength bands $W_1$, $W_2$, ..., $W_N$ included in the target wavelength region W.

[Fig. 5] Fig. 5 is a block diagram illustrating an example of a configuration of a signal processing apparatus.

[Fig. 6] Fig. 6 is a conceptual diagram illustrating an example of first reconstruction processing and second reconstruction processing.

[Fig. 7] Fig. 7 is a conceptual diagram illustrating another example of the first reconstruction processing and the second reconstruction processing.

[Fig. 8] Fig. 8 is a flowchart illustrating an example of a method for adjusting a second parameter group.

[Fig. 9] Fig. 9 illustrates an example of a GUI for allowing a user to check whether or not to employ a reconstruction target image.

[Fig. 10] Fig. 10 illustrates an example of a reconstruction target image and a reconstructed image displayed on a display device.

[Fig. 11] Fig. 11 is a flowchart illustrating a modification of the method illustrated in Fig. 10.

[Fig. 12] Fig. 12 illustrates an example in which a region in an image has been designated by a user.

[Fig. 13] Fig. 13 illustrates an example of a displayed warning.

[Fig. 14] Fig. 14 illustrates an example of a GUI for changing parameters.

[Fig. 15] Fig. 15 illustrates an example of a one-dimensional vector of $n \times m$ rows and 1 column based on image data that is two-dimensional data of $n \times m$ pixels.

Description of Embodiments

An embodiment described below illustrates a general or specific example. Numerical values, shapes, materials, constituent elements, the way in which the constituent elements are disposed and connected, steps, the order of steps, layout of a display screen, and the like in the embodiment below are examples and do not limit the technique of the present disclosure. Among constituent elements in the embodiment below, constituent elements that are not described in independent claims indicating highest concepts are described as optional constituent elements. Each drawing is a schematic view and is not necessarily strict illustration. In each drawing, substantially identical or similar constituent elements are given identical reference signs. Repeated description is sometimes omitted or simplified.

In the present disclosure, all or a part of any of circuit, unit, device, part or portion, or any of functional blocks in the block diagrams may be, for example, implemented as one or more of electronic circuits including a semiconductor device, a semiconductor integrated circuit (IC), or a large scale integration (LSI). The LSI or IC can be integrated into one chip, or also can be a combination of plural chips. For example, functional blocks other than a memory may be integrated into one chip. The name used here is LSI or IC, but it may also be called system LSI, very large scale integration (VLSI), or ultra large scale integration (ULSI) depending on the degree of integration. A Field Programmable Gate Array (FPGA) that can be programmed after manufacturing an LSI or a reconfigurable logic device that allows reconfiguration of the connection or setup of circuit cells inside the LSI can be used for the same purpose.

Further, it is also possible that all or a part of the functions or operations of the circuit, unit, device, part or portion are implemented by executing software. In such a case, the software is recorded on one or more non-transitory recording media such as a ROM, an optical disk or a hard disk drive, and when the software is executed by a processor, the software causes the processor together with peripheral devices to execute the functions specified in the software. A system or apparatus may include such one or more non-transitory recording media on which the software is recorded and a processor together with necessary hardware devices such as an interface.

In the present disclosure, data or a signal representing an image is sometimes referred to simply as an "image".

[1. Signal Processing Method]

Various algorithms can be applied to processing for generating a reconstructed image including more information from a compressed image including less information. For example, various algorithms based on the compressed sensing technique or various algorithms based on machine learning such as deep learning can be used. The individual algorithms have respective unique characteristics. For example, one algorithm enables high-accuracy reconstruction, but requires a larger computation amount and a longer reconstruction processing time. On the other hand, another algorithm enables reconstruction in a short time, but is inferior in reconstruction accuracy.

As an example, a system that inspects a product carried by a carrier device such as a belt conveyor on the basis of a hyperspectral image is discussed here. In such a system, an imaging device including an optical filter such as the one disclosed in Patent Literature 1 can be used. Such an imaging device generates a compressed image by sequentially imaging a product through an optical filter that codes an image of light in terms of wavelength. A reconstructed image (e.g., a hyperspectral image) by applying computation using an algorithm such as compressed sensing or machine learning to the generated compressed image. It is possible to perform inspection as to whether or not a product has an abnormality, whether or not a foreign substance is contained in a product, or the like on the basis of the generated reconstructed image. Such a system requires real-time processing. It is therefore necessary to perform reconstruction processing in a short time by using a high-speed algorithm. However, in such an algorithm, it is typically necessary to set many parameters to appropriate values for accurate reconstruction, and a method for efficiently optimizing the parameters is needed.

The present disclosure is based on the above discussion, and provides a technique for efficiently optimizing one or more parameters in an algorithm for reconstruction processing actually used in a scene such as inspection.

Fig. 1 is a flowchart illustrating a signal processing method according to an embodiment of the present disclosure. The signal processing method is executed by a computer. The signal processing method illustrated in Fig. 1 includes processes in steps S11 to S16 below.

(S11) acquire a compressed image including compressed information of a subject.
(S12) acquire a first parameter group and a reconstruction matrix used in first reconstruction processing for generating a reconstruction target image from the compressed image.
(S13) generate the reconstruction target image on the basis of the compressed image, the first parameter group, and the reconstruction matrix.
(S14) acquire a second parameter group used in second reconstruction processing for generating a reconstructed image from the compressed image.
(S15) generate a reconstructed image on the basis of the compressed image, the second parameter group, and the reconstruction matrix.
(S16) correct the second parameter group on the basis of the reconstruction target image and the reconstructed image.

The "compressed image" is an image of a relatively small information amount acquired by imaging. The compressed image can be, for example, image data in which information on wavelength bands is compressed as a single piece of image information but is not limited to this. The compressed image may be image data for generating a Magnetic Resonance Imaging (MRI) image. Alternatively, the compressed image may be image data for generating a high-resolution image.

The "reconstruction target image" is data of an image that is a target of reconstruction. The reconstruction target image is generated from the compressed image by the first reconstruction processing using a first algorithm. As the first algorithm, an algorithm that requires a large computation amount and has high reconstruction performance can be employed, for example. For example, an algorithm that performs reconstruction processing on the basis of compressed sensing can be employed as the first algorithm. The first parameter group is set before the first reconstruction processing is performed. The first parameter group includes one or more parameters. The first parameter group may include parameters or may include a single parameter. A parameter included in the first parameter group is sometimes referred to as a "first parameter". The first parameter group may be set by a user or may be automatically set by a system. A set value of the first parameter group can be stored in a storage medium such as a memory. In the following description, the reconstruction target image is sometimes referred simply as a "target image".

The "reconstructed image" is an image generated for a purpose such as inspection or analysis. The reconstructed image is generated from the compressed image by the second reconstruction processing using the second algorithm. As the second algorithm, an algorithm of a smaller computation load than the first algorithm can be employed. For example, an algorithm of a higher speed than the first algorithm or an algorithm that consumes less memory than the first algorithm can be employed as the second algorithm. The second parameter group is set before the second reconstruction processing is performed. The second parameter group includes one or more parameters. The second parameter group may include parameters or may include a single parameter. A parameter included in the second parameter group is sometimes referred to as a "second parameter". The second parameter group may include a larger number of parameters than the first parameter group. For example, the number of parameters of the second parameter group may be two times as large as the number of parameters of the first parameter group or larger, may be five times as large as the number of parameters of the first parameter group or larger, or may be ten times as large as the number of parameters of the first parameter group or larger. The second parameter group may include, for example, 10 or more parameters, 30 or more parameters, or 50 or more parameters.

The "reconstruction matrix" is matrix data used in the first reconstruction processing and the second reconstruction processing. The reconstruction matrix can be, for example, stored in a storage medium such as a memory in a form such as a table. Therefore, the reconstruction matrix is sometimes referred to as a "reconstruction table". The reconstruction matrix can be, for example, a matrix reflecting characteristics of an optical filter used in imaging based on compressed sensing.

The correction of the second parameter group in step S16 can include correcting the one or more parameters included in the second parameter group so that the reconstructed image approaches the reconstruction target image. For example, the correction of the second parameter group can include finding an error evaluation value concerning an error between the target reconstruction image and the reconstructed image and correcting the one or more parameters included in the second parameter group so that the error evaluation value is minimized. This makes it possible to tune the second parameter group so that the reconstructed image approaches the reconstruction target image.

The final second parameter group may be decided by repeating the process in step S15 and the process in step S16 plural times. That is, the signal processing method may include correcting the second parameter group on the basis of the reconstruction target image and the reconstructed image and deciding the final second parameter group by repeating generating a reconstructed image by using the corrected second parameter group plural times. This makes it possible to optimize the second parameter group, for example, so that the reconstructed image almost matches the reconstruction target image.

The second reconstruction processing may include processing based on a trained model trained through machine learning such as deep learning. Such processing is high-speed processing and can generate a reconstructed image in a short time. The algorithm based on machine learning is required to optimize a large number of parameters. **In** the present embodiment, it is possible to efficiently optimize the parameters on the basis of a high-accuracy reconstruction target image.

The first reconstruction processing need not include the processing based on a trained model trained through machine learning. The first reconstruction processing can include, for example, iterative operation for minimizing or maximizing an evaluation function based on the compressed image and the reconstruction matrix. An algorithm that performs such iterative operation can perform high-accuracy reconstruction, but requires a large computation amount and cannot generate a reconstructed image in a short time. Therefore, the first algorithm that performs the first reconstruction processing is not used in an actual environment such as inspection and is used to generate a reconstruction target image that is referred to for correction of the second parameter group in the second algorithm used in an actual environment. It is possible to improve reconstruction performance of the second reconstruction processing by correcting the second parameter group by using a high-accuracy reconstruction target image generated by the first reconstruction processing.

The compressed image may be an image in which spectral information of a subject is coded. In other words, the compressed image may be an image obtained by compressing information on wavelength bands of a subject as a single monochromatic image. In this case, the reconstruction target image and the reconstructed image may each include information on images corresponding to the wavelength bands. Therefore, images of the wavelength bands (e.g., hyperspectral image) can be generated from the compressed image.

The above method may further include displaying, on a display device, a graphical user interface (GUI) for allowing a user to enter the first parameter group. The user can thus set the first parameter group on the GUI.

The above method may further include repeating the correcting the second parameter group on the basis of the reconstruction target image and the reconstructed image and the generating the reconstructed image by using the corrected second parameter group a predetermined number of times unless an end condition is satisfied, calculating an error evaluation value concerning an error between the reconstructed image after the predetermined number of times of the repetition and the reconstruction target image, and displaying, on the display device, a GUI that prompts the user to perform at least one of re-entry of the first parameter group, change of the predetermined number of times, or change of the end condition in a case where the error evaluation value is larger than a threshold value. This allows the user to change a condition for generation of the reconstruction target image in a case where the error evaluation value concerning the error between the reconstructed image and the reconstruction target image does not become equal to or less than the threshold value.

The calculating the error evaluation value may include extracting a first region in the reconstruction target image, extracting a second region corresponding to the first region in the reconstructed image, and deciding the error evaluation value on the basis of a difference between the first region and the second region. The first region and the second region can be, for example, decided on the basis of a region designated by the user. This makes it possible to correct the second parameter group so that an error in the regions extracted from the reconstructed image and the reconstruction target image becomes small.

A signal processing apparatus according to another embodiment of the present disclosure includes one or more processors and a memory in which a computer program to be executed by the one or more processors is stored. The computer program causes the one or more processors to execute the signal processing method described above. That is, the computer program causes the one or more processors to execute (a) acquiring a compressed image including compressed information of a subject, (b) acquiring a first parameter group and a reconstruction matrix used in first reconstruction processing for generating a reconstruction target image from the compressed image, (c) generating the reconstruction target image on the basis of the compressed image, the first parameter group, and the reconstruction matrix, (d) acquiring a second parameter group used in second reconstruction processing for generating a reconstructed image from the compressed image, (e) generating the reconstructed image on the basis of the compressed image, the second parameter group, and the reconstruction matrix, and (f) correcting the second parameter group on the basis of the reconstruction target image and the reconstructed image.

According to the above configuration, the second parameter for generating a reconstructed image can be properly corrected on the basis of the reconstruction target image generated by the first reconstruction processing and the reconstructed image generated by the second reconstruction processing.

## [2. Imaging System]

Next, an example of a configuration of an imaging system that can be used in an exemplary embodiment of the present disclosure is described.

Fig. 2A schematically illustrates an example of a configuration of the imaging system. This imaging system includes an imaging device 100 and a signal processing apparatus 200 (hereinafter simply referred to as a "processing apparatus 200"). The imaging device 100 has a configuration similar to the imaging device disclosed in Patent Literature 1. The imaging device 100 includes an optical system 140, a filter array 110, and an image sensor 160. The optical system 140 and the filter array 110 are disposed on an optical path of light entering from a target 70, which is a subject. The filter array 110 in the example of Fig. 2A is disposed between the optical system 140 and the image sensor 160.

In Fig. 2A, an apple is illustrated as an example of the target 70. The target 70 is not limited to an apple and can be any object. The image sensor 160 generates data of a compressed image 10 that is information on wavelength bands compressed as a two-dimensional monochromatic image. The processing apparatus 200 generates image data for each of wavelength bands included in a predetermined target wavelength region on the basis of the data of the compressed image 10 generated by the image sensor 160. The generated image data of the wavelength bands is sometimes referred to as a "hyperspectral (HS) data cube" or "hyperspectral image data". It is assumed here that the number of wavelength bands included in the target wavelength region is N (N is an integer of 4 or more). In the following description, the generated image data of the wavelength bands is referred to as a reconstructed image $20W_1$, $20W_2$, ..., and $20W_N$, which are sometimes collectively referred to as a "hyperspectral image 20" or a "hyperspectral data cube 20". Hereinafter, data or a signal representing an image, that is, a collection of data or signals indicative of pixel values of pixels is sometimes referred to simply as an "image".

The filter array 110 according to the present embodiment is an array of light-transmitting filters that are arranged in rows and columns. The filters include kinds of filters that are different from each other in spectral transmittance, that is, wavelength dependence of light transmittance. The filter array 110 outputs incident light after modulating an intensity of the incident light for each wavelength. This process using the filter array 110 is referred to as "coding", and the filter array 110 is sometimes called a "coding element" or a "coding mask".

In the example illustrated in Fig. 2A, the filter array 110 is disposed in the vicinity of or directly on the image sensor 160. The "vicinity" as used herein means being close to such a degree that an image of light from the optical system 140 is formed on a surface of the filter array 110 in a certain level of clarity. The "directly on" means that the filter array 110 and the image sensor 160 are disposed close to such a degree that almost no gap is formed therebetween. The filter array 110 and the image sensor 160 may be integral with each other.

The optical system 140 includes at least one lens. Although the optical system 140 is illustrated as a single lens in Fig. 2A, the optical system 140 may be a combination of lenses. The optical system 140 forms an image on an imaging surface of the image sensor 160 through the filter array 110.

The filter array 110 may be disposed away from the image sensor 160. Figs. 2B to 2D illustrate an example of a configuration of the imaging device 100 in which the filter array 110 is disposed away from the image sensor 160. In the example of Fig. 2B, the filter array 110 is disposed between the optical system 140 and the image sensor 160 away from the image sensor 160. In the example of Fig. 2C, the filter array 110 is disposed between the target 70 and the optical system 140. In the example of Fig. 2D, the imaging device 100 includes two optical systems 140A and 140B, and the filter array 110 is disposed between the optical systems 140A and 140B. As in these examples, an optical system including one or more lenses may be disposed between the filter array 110 and the image sensor 160.

The image sensor 160 is a monochromatic photodetector that has photodetection elements (hereinafter also referred to as "pixels") that are arranged within a two-dimensional plane. The image sensor 160 can be, for example, a charge-coupled device (CCD), a complementary metal oxide semiconductor (CMOS) sensor, or an infrared array sensor. Each of the photodetection elements includes, for example, a photodiode. The image sensor 160 need not necessarily be a monochromatic sensor. For example, a color-type sensor including red (R) / green (G) /blue (B) filters, R / G / B / infrared (IR) filters, or R / G / B / transparent (W) filters may be used. Use of a color-type sensor can increase an amount of information concerning a wavelength and can improve accuracy of reconstruction of the hyperspectral image 20. A wavelength range to be acquired may be any wavelength range, and is not limited to a visible wavelength range and may be a wavelength range such as an ultraviolet wavelength range, a near-infrared wavelength range, a mid-infrared wavelength range, or a far-infrared wavelength range.

The processing apparatus 200 can be a computer including one or more processors and one or more storage media such as a memory. The processing apparatus 200 generates data of the reconstructed images $20W_1$, $20W_2$, ..., and $20W_N$ on the basis of the compressed image 10 acquired by the image sensor 160. The processing apparatus 200 may be incorporated into the imaging device 100.

Fig. 3A schematically illustrates an example of the filter array 110. The filter array 110 has regions arranged within a two-dimensional plane. Hereinafter, each of the regions is sometimes referred to as a "cell". In each of the regions, an optical filter having individually set spectral transmittance is disposed. The spectral transmittance is expressed as a function T ($\lambda$) where $\lambda$ is a wavelength of incident light. The spectral transmittance T ($\lambda$) can take a value greater than or equal to 0 and less than or equal to 1.

In the example illustrated in Fig. 3A, the filter array 110 has 48 rectangular regions arranged in 6 rows and 8 columns. This is merely an example, and a larger number of regions can be provided in actual use. For example, the number of regions may be similar to the number of pixels of the image sensor 160. The number of filters included in the filter array 110 is, for example, decided within a range from tens of filters to tens of millions of filters depending on use.

Fig. 3B illustrates an example of a spatial distribution of transmittance of light of each of the wavelength bands $W_1$, $W_2$, ..., and $W_N$ included in the target wavelength region. In the example illustrated in Fig. 3B, differences in density among regions represent differences in transmittance. A paler region has higher transmittance, and a deeper region has lower transmittance. As illustrated in Fig. 3B, a spatial distribution of light transmittance varies depending on a wavelength band.

Figs. 3C and 3D illustrate an example of spectral transmittance of a region A1 and an example of spectral transmittance of a region A2 included in the filter array 110 illustrated in Fig. 3A, respectively. The spectral transmittance of the region A1 and the spectral transmittance of the region A2 are different from each other. That is, the spectral transmittance of one region included in the filter array 110 varies from another region included in the filter array 110. However, not all regions need to be different in spectral transmittance. In the filter array 110, at least some of the regions are different from each other in spectral transmittance. The filter array 110 includes two or more filters that are different from each other in spectral transmittance. In one example, the number of patterns of spectral transmittance of the regions included in the filter array 110 can be identical to or larger than the number N of wavelength bands included in the target wavelength region. The filter array 110 may be designed so that half or more of the regions is different in spectral transmittance.

Figs. 4A and 4B are views for explaining a relationship between the target wavelength region W and the wavelength bands $W_1$, $W_2$, ..., and $W_N$ included in the target wavelength region W. The target wavelength region W can be set to various ranges depending on use. The target wavelength region W can be, for example, a wavelength region of visible light of approximately 400 nm to approximately 700 nm, a wavelength region of a near-infrared ray of approximately 700 nm to approximately 2500 nm, or a wavelength region of a near-ultraviolet ray of approximately 10 nm to approximately 400 nm. Alternatively, the target wavelength region W may be a wavelength region such as a mid-infrared wavelength region or a far-infrared wavelength region. That is, a wavelength region used is not limited to a visible light region. Hereinafter, not only visible light, but also all kinds of radiation including an infrared ray and an ultraviolet ray are referred to as "light".

In the example illustrated in Fig. 4A, N wavelength regions obtained by equally dividing the target wavelength region W are the wavelength band $W_1$, the wavelength band $W_2$, ..., and the wavelength band $W_N$ where N is an integer of 4 or more. However, such an example is not restrictive. The wavelength bands included in the target wavelength region W may be set in any ways. For example, the wavelength bands may have nonuniform bandwidths. A gap may be present between adjacent wavelength bands or adjacent wavelength bands may overlap each other. In the example illustrated in Fig. 4B, a bandwidth varies from one wavelength band to another and a gap is present between adjacent two wavelength bands. In this way, the wavelength bands can be decided in any way.

In the example illustrated in Figs. 3A to 3D, a gray-scale transmittance distribution in which transmittance of each region can take any value greater than or equal to 0 and less than or equal to 1 is assumed. However, the transmittance distribution need not necessarily be a gray-scale transmittance distribution. For example, a binary-scale transmittance distribution in which transmittance of each region can take either almost 0 or almost 1 may be employed. In the binary-scale transmittance distribution, each region allows transmission of a large part of light of at least two wavelength regions among wavelength regions included in the target wavelength region and does not allow transmission of a large part of light of a remaining wavelength region. The "large part" refers to approximately 80% or more.

A certain cell among all cells, for example, a half of all the cells may be replaced with a transparent region. Such a transparent region allows transmission of light of all of the wavelength bands $W_1$ to $W_N$ included in the target wavelength region W at equally high transmittance, for example, transmittance of 80% or more. In such a configuration, transparent regions can be, for example, disposed in a checkerboard pattern. That is, a region in which light transmittance varies depending on a wavelength and a transparent region can be alternately arranged in two alignment directions of the regions of the filter array 110.

Data indicative of such a spatial distribution of spectral transmittance of the filter array 110 can be acquired in advance on the basis of design data or actual calibration and stored in a storage medium included in the processing apparatus 200. This data is used for arithmetic processing which will be described later.

The filter array 110 can be, for example, constituted by a multi-layer film, an organic material, a diffraction grating structure, or a microstructure containing a metal. In a case where a multi-layer film is used, for example, a dielectric multi-layer film or a multi-layer film including a metal layer can be used. In this case, the filter array 110 is formed so that at least one of a thickness, a material, and a laminating order of each multi-layer film varies from one cell to another. This can realize spectral characteristics that vary from one cell to another. Use of a multi-layer film can realize sharp rising and falling in spectral transmittance. A configuration using an organic material can be realized by varying contained pigment or dye from one cell to another or laminating different kinds of materials. A configuration using a diffraction grating structure can be realized by providing a diffraction structure having a diffraction pitch or depth that varies from one cell to another. In a case where a microstructure containing a metal is used, the filter array 110 can be produced by utilizing dispersion of light based on a plasmon effect.

Next, an example of signal processing performed by the processing apparatus 200 is described. The processing apparatus 200 generates the multiwavelength hyperspectral image 20 on the basis of the compressed image 10 output from the image sensor 160 and spatial distribution characteristics of transmittance for each wavelength of the filter array 110. The multiwavelength means, for example, a larger number of wavelength regions than RGB (red, green, and blue) three wavelength regions acquired by a general color camera. The number of wavelength regions can be, for example, 4 to approximately 100. The number of wavelength regions is referred to as "the number of bands". The number of bands may be larger than 100 depending on intended use.

Data to be obtained is data of the hyperspectral image 20, which is expressed as f. The data f is data including image data $f_1$ of an image corresponding to the wavelength band $W_1$, the image data $f_2$ of an image corresponding to the wavelength band $W_2$, ..., and image data $f_N$ of an image corresponding to the wavelength band $W_N$ where N is the number of bands. It is assumed here that a lateral direction of the image is an x direction and a longitudinal direction of the image is a y direction, as illustrated in Fig. 2A. Each of the image data $f_1$, the image data $f_2$, ..., and the image data $f_N$ is two-dimensional data of $n \times m$ pixels where m is the number of pixels of the image data to be obtained in the x direction and n is the number of pixels of the image data to be obtained in the y direction. Accordingly, the data f is three-dimensional data that has $n \times m \times N$ elements. This three-dimensional data is referred to as "hyperspectral image data" or a "hyperspectral data cube". Meanwhile, image data g of the compressed image 10 acquired by coding and multiplexing by the filter array 110 is two-dimensional data of $n \times m$ pixels. The image data g can be expressed by the following formula (1).

[Math. 1]

$$g = Hf = H \begin{bmatrix} f_1 \\ f_2 \\ \vdots \\ f_N \end{bmatrix} \qquad (1)$$

In the formula (1), g is a one-dimensional vector of $n \times m$ rows and 1 column based on the image data g, which is two-dimensional data of $n \times m$ pixels.

In the formula (1), $f_1$ is a one-dimensional vector of $n \times m$ rows and 1 column based on the image data $f_1$, which is two-dimensional data of $n \times m$ pixels, $f_2$ is a one-dimensional vector of $n \times m$ rows and 1 column based on the image data

$f_2$, which is two-dimensional data of n × m pixels, ..., and $f_N$ is a one-dimensional vector of n × m rows and 1 column based on the image data $f_N$, which is two-dimensional data of n × m pixels.

Fig. 15 illustrates an example of a one-dimensional vector of n × m rows and 1 column based on image data that is two-dimensional data of n × m pixels. i (1, 1) indicates a pixel value of a pixel located at coordinates (x, y) = (1, 1), ..., i (n, m) indicates a pixel value of a pixel located at coordinates (x, y) = (n, m).

In the formula (1), f is a one-dimensional vector of n × m × N rows and 1 column. A matrix H represents conversion of performing coding and intensity modulation of components $f_1$, $f_2$, ..., and $f_N$ of f by using different pieces of coding information (also referred to as "mask information") for the respective wavelength bands and adding results thus obtained. Accordingly, H is a matrix of n × m rows and n × m × N columns. This matrix H is sometimes referred to as a "reconstruction matrix".

It seems that when g and the matrix H are given, f can be calculated by solving an inverse problem of the formula (1). However, since the number of elements n × m × N of the data f to be obtained is larger than the number of elements n × m of the acquired data g, this problem is an ill-posed problem and cannot be solved. In view of this, the processing apparatus 200 finds a solution by using a method of compressed sensing while utilizing redundancy of the images included in the data f. Specifically, the data f to be obtained is estimated by solving the following formula (2).

[Math. 2]

$$f' = \arg\min_{f}\{\|g - Hf\|_{l_2} + \tau\Phi(f)\} \qquad (2)$$

In the formula (2), f represents the estimated data f. The first term in the parentheses in the above formula represents a difference amount between an estimation result Hf and the acquired data g, that is, a residual term. Although a sum of squares is a residual term in this formula, an absolute value, a square-root of sum of squares, or the like may be a residual term. The second term in the parentheses is a regularization term or a stabilization term. The formula (2) means that f that minimizes a sum of the first term and the second term is found. The function in the parentheses in the formula (2) is called an evaluation function. The processing apparatus 200 can calculate, as the final solution f, f that minimizes the evaluation function by convergence of solutions by recursive iterative operation.

The first term in the parentheses in the formula (2) means operation of finding a sum of squares of a difference between the acquired data g and Hf obtained by converting f in the estimation process by the matrix H. Φ(f) in the second term is a constraint condition in regularization of f and is a function reflecting sparse information of the estimated data. This function brings an effect of smoothing or stabilizing the estimated data. The regularization term can be, for example, expressed by discrete cosine transform (DCT), wavelet transform, Fourier transform, total variation (TV), or the like of f. For example, in a case where total variation is used, stable estimated data with suppressed influence of noise of the observed data g can be acquired. Sparsity of the target 70 in the space of the regularization term varies depending on texture of the target 70. A regularization term that makes the texture of the target 70 more sparse in the space of the regularization term may be selected. Alternatively, regularization terms may be included in calculation. τ is a weight coefficient. As the weight coefficient τ becomes larger, an amount of reduction of redundant data becomes larger, and a compression rate increases. As the weight coefficient τ becomes smaller, convergence to a solution becomes weaker. The weight coefficient τ is set to such a proper value that f converges to a certain extent and is not excessively compressed.

Note that in the configurations of Fig. 2B and Fig. 2C, an image coded by the filter array 110 is acquired in a blurred state on the imaging surface of the image sensor 160. Therefore, the hyperspectral image 20 can be generated by holding the blur information in advance and reflecting the blur information in the matrix H. The blur information is expressed by a point spread function (PSF). The PSF is a function that defines a degree of spread of a point image to surrounding pixels. For example, in a case where a point image corresponding to 1 pixel on an image spreads to a region of k × k pixels around the pixel due to blurring, the PSF can be defined as a coefficient group, that is, as a matrix indicative of influence on a pixel value of each pixel within the region. The hyperspectral image 20 can be generated by reflecting influence of blurring of a coding pattern by the PSF in the matrix H. Although the filter array 110 can be disposed at any position, a position where the coding pattern of the filter array 110 does not disappear due to excessive spread can be selected.

Through the above processing, the hyperspectral image 20 can be generated from the compressed image 10 acquired by the image sensor 160.

[3. Optimization of Parameter for Reconstruction Processing]

For example, a system that inspects or analyzes a target carried by a carrier device on the basis of a hyperspectral image can be constructed by using the imaging system described above. In such a system, it is required to perform reconstruction processing for generating a reconstructed image from a compressed image in a short time in order to realize real-time inspection or analysis. However, an existing algorithm based on compressed sensing requires a large calculation amount and sometimes cannot complete the processing in a required short time although the algorithm has high reconstruction performance. On the other hand, there is an existing algorithm that enables high-speed processing, but such an algorithm has a large number of parameters to be set, and optimization of the parameters is difficult or complicated.

Processing for generating a reconstructed image from a compressed image can be performed not only by using an algorithm using compressed sensing based on the above formula (2), but also by using an algorithm using machine learning. Examples of the algorithm using machine learning include an algorithm that generates a reconstructed image by applying a trained model trained by deep learning to a compressed image. A period required for reconstruction processing can be shortened by using such an algorithm. However, optimization of parameters is needed for high-accuracy reconstruction. **In** view of this, a method for optimizing parameters in a machine learning algorithm on the basis of a reconstruction target image generated by using an algorithm based on compressed sensing can be used. This makes it possible to efficiently optimize the parameters.

Fig. 5 is a block diagram illustrating an example of a configuration of the processing apparatus 200. The processing apparatus 200 illustrated in Fig. 5 is used in combination with the imaging device 100 and a terminal device 500. The imaging device 100 can be a hyperspectral imaging device described above. The terminal device 500 is a computer for performing various operations concerning parameter optimization processing for generating a reconstructed image. The terminal device 500 includes an input device 510 and a display device 520.

The processing apparatus 200 includes one or more processors 210 such as a CPU or a GPU and one or more memories 250. The memory 250 stores therein a computer program to be executed by the processor 210 and various kinds of data generated by the processor 210. The computer program causes the processor 210 to perform the signal processing method illustrated in Fig. 1. That is, the processor 210 performs the following processing by executing the computer program.

- · acquire a compressed image generated by the imaging device 100.
- · acquire a first parameter group and a reconstruction matrix (corresponding to the matrix H) from the memory 250.
- · generate a reconstruction target image on the basis of the compressed image, the first parameter group, and the reconstruction matrix.
- · acquire a second parameter group from the memory 250.
- · generate a reconstructed image on the basis of the compressed image, the second parameter group, and the reconstruction matrix.
- · correct the second parameter group on the basis of the reconstruction target image and the reconstructed image.

**In** the example illustrated in Fig. 5, the processor 210 has functions as a reconstruction target image generation unit 212, an image reconstruction unit 214, and a parameter optimization unit 216. These functions can be realized by software processing. Although the single processor 210 performs all of processing of the reconstruction target image generation unit 212, processing of the image reconstruction unit 214, and processing of the parameter optimization unit 216 in the present embodiment, this is merely an example. These kinds of processing may be performed by pieces of hardware (e.g., circuits or computers). For example, the reconstruction target image generation processing, image reconstruction processing, and parameter optimization processing may be performed by computers connected to each other over a network.

The reconstruction target image generation unit 212 generates a reconstruction target image by performing first reconstruction processing based on the compressed image generated by the imaging device 100 and the first parameter group and the reconstruction matrix stored in the memory 250. A first algorithm is used in the first reconstruction processing. The generated reconstruction target image is output to the display device 520 and the reconstruction parameter optimization unit 216.

The image reconstruction unit 214 generates a reconstructed image by performing second reconstruction processing based on the compressed image, the second parameter group, and the reconstruction matrix. A second algorithm is used in the second reconstruction processing. The generated reconstructed image is output to the display device 520 and the parameter optimization unit 216.

The parameter optimization unit 216 corrects the second parameter group on the basis of the reconstruction target image and the reconstructed image and outputs the corrected second parameter group to the image reconstruction unit 214. The reconstruction parameter optimization unit 216 corrects the second parameter group, for example, so that a difference between the reconstructed image and the reconstruction target image becomes small. The processing for correcting the second parameter group on the basis of the reconstruction target image and the reconstructed image and the processing for generating the reconstructed image by using the corrected second parameter group are repeated a predetermined number of times, and a final value of the second parameter group is decided. The second parameter group is thus optimized.

In a case where a hyperspectral image is generated from the compressed image, the reconstruction target image and the reconstructed image each include images corresponding to wavelength bands. The wavelength bands can include, for example, four or more bands having a relatively narrow band width such as a band of wavelengths 400 nm to 410 nm and a band of wavelengths 410 nm to 420 nm. The correcting the second parameter group so that the reconstructed image approaches the reconstruction target image can include correcting one or more values corresponding to one or more parameters included in the second parameter group so that the images of the bands of the reconstructed image approach the images of the corresponding bands of the reconstruction target image. For example, the second parameter group can be corrected so that an image of wavelengths 400 nm to 410 nm of the reconstructed image approaches an image of wavelengths 400 nm to 410 nm of the reconstruction target image and an image of wavelengths 410 nm to 420 nm of the reconstructed image approaches an image of wavelengths 410 nm to 420 nm of the reconstruction target image.

The difference between the reconstructed image and the reconstruction target image can be evaluated on the basis of an error evaluation value. The error evaluation value can be, for example, calculated by calculating an error for each pair of images of wavelength bands that correspond on a one-to-one basis between the reconstructed image and the reconstruction target image and summing up or averaging these errors. That is, minimizing the error evaluation value can include minimizing the sum or an average of the errors concerning the respective wavelength bands.

The display device 520 displays the reconstruction target image and the reconstructed image generated in the process of optimizing the second parameter group.

The input device 510 can include a device such as a keyboard or a mouse used by a user to set various setting items such as the first parameter group.

Fig. 6 is a conceptual diagram illustrating an example of the first reconstruction processing and the second reconstruction processing. The first reconstruction processing in this example uses the first algorithm based on compressed sensing and generates a reconstruction target image by the recursive iterative operation indicated by the formula (2). The first parameter group in the first algorithm can include several parameters such as the number of iterations and the regularization coefficient $\tau$. An initial value of the first parameter group is stored in advance in the memory 250. The first parameter group can be set by the user by using the input device 510. The first reconstruction processing includes iterative operation of minimizing an evaluation function based on the compressed image and the reconstruction matrix, that is, the function in the parentheses of the right side of the formula (2). Note that instead of the function in the parentheses of the right side of the formula (2), an evaluation function expressing an inverse number of a value of this function may be used, for example. In this case, the first reconstruction processing includes iterative operation of maximizing the evaluation function based on the compressed image and the reconstruction matrix.

The second reconstruction processing in the example of Fig. 6 generates the reconstructed image by using the second algorithm based on machine learning such as deep learning. In addition, the second parameter group is corrected so that an error evaluation value concerning an error between the reconstructed image and the reconstruction target image is minimized. The error evaluation value can be, for example, the square or a sum or an average of absolute values of differences of pixel values in a subject's region of interest between the reconstructed image and the reconstruction target image. In deep learning, nodes are provided in each of an input layer, hidden layers, and an output layer, and each of the nodes has a unique weight. The second parameter group can include weights of the nodes and a hyper parameter in the deep learning algorithm. The hyper parameter can include, for example, parameters specifying the number of times of learning, a learning rate, and a learning algorithm. The second parameter group can include, for example, several hundreds of parameters or more. In a case where the second parameter group is corrected, an algorithm that specifies the weight of the nodes, the number of times of learning, a learning rate, and/or a learning algorithm may be corrected.

In the example of Fig. 6, learning in the second reconstruction processing, that is, optimization of the second parameter group is performed while using the reconstruction target image generated in the first reconstruction processing as learning data. This makes it possible to efficiently optimize the second parameter group.

The second reconstruction processing need not necessarily be performed by a machine learning algorithm. For example, the second reconstruction processing may be performed by an algorithm based on compressed sensing.

Fig. 7 is a conceptual diagram illustrating another example of the first reconstruction processing and the second reconstruction processing. In the example of Fig. 7, both of the first reconstruction processing and the second reconstruction processing are performed by using an algorithm based on compressed sensing. The first reconstruction processing can be, for example, performed by a first algorithm that has high reconstruction performance but is high in computation load. On the other hand, the second reconstruction processing can be performed by a second algorithm that is lower in computation load than the first algorithm but requires setting of a larger number of parameters.

In the first reconstruction processing illustrated in Fig. 7, iterative operation based on an iterative operation function $\Psi_1$ that depends on n first parameters $p_1$, ..., $p_n$ is performed. On the other hand, in the second reconstruction processing, iterative operation based on an iterative operation function $\Psi_2$ that depends on m second parameters $q_1$, ..., $q_m$ where m is larger than n is performed. In Fig. 7, a reconstruction target image generated in k-th iterative operation is expressed as $f_1^k$, and a reconstructed image generated in the k-th iterative operation is expressed as $f_2^k$. The first parameters $p_1$, ..., $p_n$ can be, for example, set by a user. Since m is larger than n, adjustment of the second parameters $q_1$, ..., $q_m$ is more difficult than adjustment of the first parameters $p_1$, ..., $p_n$. In the present embodiment, the second

parameters $q_1, \ldots, q_m$ are optimized so that the reconstructed image generated in the second reconstruction processing approaches the reconstruction target image generated in the first reconstruction processing. This makes it possible to efficiently optimize the second parameter group.

Any compressed sensing algorithm such as Iterative shrinkage/thresholding, Two-step iterative shrinkage/-thresholding, or Generalized alternating projection-total variation can be used as the first algorithm in the example of Fig. 6 and as the first algorithm and the second algorithm in the example of Fig. 7. An algorithm different from the first algorithm is selected as the second algorithm. The second algorithm can be selected from among algorithms that have some sort of advantage such as a shorter computation time, higher memory efficiency, or higher reconstruction accuracy than the first algorithm.

Fig. 8 is a flowchart illustrating an example of a method for adjusting the second parameter group. The method illustrated in Fig. 8 is performed by the processor 210 of the processing apparatus 200.

In step S101, the processor 210 acquires a compressed image generated by the imaging device 100. The processor 210 may acquire the compressed image directly from the imaging device 100 or may acquire the compressed image via a storage medium such as the memory 250.

In step S102, the processor 210 acquires the reconstruction matrix from the memory 250. The reconstruction matrix is generated in advance and is stored in the memory 250. Step S102 may be performed before step S101 or may be performed concurrently with step S101.

In step S103, the processor 210 acquires a value of the first parameter group from the memory 250. In a case where a user sets the first parameter group by using the input device 510, the processor 210 acquires a set value of the first parameter group.

In step S104, the processor 210 generates a reconstruction target image on the basis of the compressed image, the reconstruction matrix, and the first parameter group. This processing corresponds to the first reconstruction processing and is performed by using the first algorithm. In a case where the first algorithm is an algorithm that performs iterative operation based on compressed sensing, the reconstruction target image is generated by performing the iterative operation a preset number of times.

In step S105, it is determined whether or not the reconstruction target image is a desired image. This determination can be performed on the basis of user's operation using the input device 510. For example, the processor 210 causes the generated reconstruction target image and a GUI for allowing the user to check whether or not to employ the reconstruction target image to be displayed on the display device 520, and it may be determined that the reconstruction target image is a desired image in a case where the user approves employment of the reconstruction target image.

Fig. 9 illustrates an example of a GUI for allowing a user to check whether or not to employ the reconstruction target image. In the example of Fig. 9, a generated reconstruction target image 521, the number of times of iterative operation and the regularization coefficient, which are the first parameters, and a GUI 522 are displayed on the display device 520. The GUI 522 includes an "OK" button and a "PARAMETER RESETTING" button. When the user presses the "OK" button, the displayed reconstruction target image is employed, and the processing proceeds to step S106. On the other hand, when the user presses the "PARAMETER RESETTING" button, the user can set the first parameters again. In this case, the processing returns to step S103, in which the processor 210 generates a reconstruction target image again by using the first parameters thus set again. Hereinafter, the processes in steps S103 to S105 are repeated until it is determined in step S105 that a desired image has been obtained.

Through the above processing, generation of a reconstruction target image by the first reconstruction processing is completed. Subsequently, a reconstructed image is generated by the second reconstruction processing.

In step S106, the processor 210 sets the second parameter group to an initial value stored in the memory 250.

In step S107, the processor 210 generates a reconstructed image on the basis of the compressed image, the reconstruction matrix, and the second parameter group. This processing corresponds to the second reconstruction processing and is performed by using the second algorithm. In a case where the second algorithm is an algorithm that performs iterative operation based on compressed sensing, a reconstructed image is generated by performing iterative operation a preset number of times.

In step S108, the processor 210 evaluates an error by comparing the reconstructed image with the reconstruction target image. For example, the processor 210 decides an error evaluation value by using an error evaluation function indicative of a difference between the reconstructed image and the reconstruction target image. For example, Mean Squared Error (MSE) can be used as the error evaluation function. The MSE is expressed by the following formula (3).
[Math. 3]

$$MSE = \frac{1}{n \cdot m} \sum_{i=1}^{n} \sum_{j=1}^{m} (f_{ij} - I_{ij})^2 \qquad (3)$$

In the formula (3), n and m represents the number of pixels in a vertical direction and the number of pixels in a horizontal direction in an image, respectively, $f_{i,j}$ represent pixel values of i rows and j columns of a correct image, and $I_{i,j}$ represent pixel values of i rows and j columns of an estimated reconstructed image. The error can be expressed not only by the MSE, but also by another error evaluation index such as Root MSE (RMSE), Peak-Signal-to-Noise-Ratio (PSNR), Mean Absolute Error (MAE), Structural Similarity (SSMI), or a spectral angle.

In the present embodiment, the reconstruction target image and the reconstructed image each includes images corresponding to wavelengths bands. For example, images such as an image corresponding to a band of wavelengths 400 nm to 410 nm and an image corresponding to a band of wavelengths 410 nm to 420 nm can be generated in the first reconstruction processing and the second reconstruction processing. In such a case, an error evaluation function such as the MSE can be calculated for each pair of corresponding bands between the reconstructed image and the reconstruction target image. The error evaluation value can be decided by summing up or averaging values of error evaluation functions calculated for the respective bands.

The reconstruction target images may include a first reconstruction target image corresponding to the wavelength band $W_1$, a second reconstruction target image corresponding to the wavelength band $W_2$, ..., and an N-th reconstruction target image corresponding to the wavelength band $W_N$.

The reconstructed images may include a first reconstructed image corresponding to the wavelength band $W_1$, a second reconstructed image corresponding to the wavelength band $W_2$, ..., and an N-th reconstructed image corresponding to the wavelength band $W_N$.

Error evaluation values concerning errors between the reconstruction target images and the reconstructed images may be decided on the basis of a first error evaluation value concerning an error between the first reconstruction target image and the first reconstructed image, a second error evaluation value concerning an error between the second reconstruction target image and the second reconstructed image, ..., and an N-th error evaluation value concerning an error between the N-th reconstruction target image and the N-th reconstructed image.

The following may be established: (the error evaluation values concerning errors between the reconstruction target images and the reconstructed images) = {(the first error evaluation value) + (the second error evaluation value) + ... + (N-th error evaluation value)}.

The following may be established: (the error evaluation values concerning errors between the reconstruction target images and the reconstructed images) = {(the first error evaluation value) + (the second error evaluation value) + ... + (the N-th error evaluation --> value)} / N.

The first error evaluation value may be an MSE between the first reconstruction target image and the first reconstructed image, the second error evaluation value may be an MSE between the second reconstruction target image and the second reconstructed image, ..., and the N-th error evaluation value may be an MSE between the N-th reconstruction target image and the N-th reconstructed image.

In step S109, the processor 210 updates the second parameter group so that an error between the reconstructed image and the reconstruction target image becomes small. For example, the second parameter group can be updated so that the error evaluation value becomes small by using a method such as a gradient descent method or Bayesian optimization.

In step S110, the processor 210 determines whether or not a preset loop end condition is satisfied. The loop end condition can be, for example, a condition that the optimization loop in steps S107 to S109 has repeated a predetermined number of times, a condition that the error evaluation value between the reconstructed image and the reconstruction target image has become smaller than a threshold value, or the like. In a case where the loop end condition is not satisfied, step S107 is performed again. In a case where the loop end condition is satisfied, the processing ends.

The processor 210 may cause a reconstructed image in a generation process to be displayed on the display device 520 together with the reconstruction target image while performing the processes in steps S107 to S109. This allows a user to check if optimization of the second parameter group has been successfully performed by comparing the reconstructed image and the reconstruction target image.

Fig. 10 illustrates an example of the reconstruction target image 521 and a reconstructed image 523 displayed on the display device 520. In this example, the reconstruction target image 521 and the reconstructed image 523 after optimization of the second parameter group are displayed side by side. The first parameters for generating the reconstruction target image 521 and an optimization loop end condition of the processing for generating the reconstructed image 523 are also displayed. The first parameters and he end condition can be set by user’s operation using the input device 510. In the example of Fig. 10, the first parameters include the number of times of iterative operation and the regularization coefficient, and the optimization loop end condition includes a maximum number of loops and an allowable value of an error. The user can see the displayed reconstruction target image 521 and reconstructed image 523 and cause the processor 210 to perform reconstruction processing again after changing the parameters or optimization loop end condition as needed.

Fig. 11 is a flowchart illustrating a modification of the method illustrated in Fig. 8. The flowchart illustrated in Fig. 11 is different from the flowchart illustrated in Fig. 8 in that step S206 is added between step S105 and step S106, step S108 is replaced with step S208, and steps S211 and S212 are performed in a case of Yes in step S110. The following describes differences from the example of Fig. 8.

In the example of Fig. 11, step S206 is performed after it is determined that a result of determination in step S105 is Yes. In step S206, the processor 210 extracts one or more regions from the reconstruction target image. The processor 210 can be, for example, configured to extract one or more regions designated by the user. The user designates, for example, a region where an important subject that requires inspection or analysis is present. Fig. 12 illustrates an example in which a region has been designated by the user. In this example, a region A where a specific subject is present is designated. A region B that has not been designated is processed as background. The processor 210 may extract, from the reconstruction target image, a region where an important subject is estimated to be present by image processing without user's operation. After step S206, step S106 and step S107 are performed, in which a reconstructed image is generated.

In subsequent step S208, the processor 210 evaluates an error by comparing the reconstructed image with the reconstruction target image. In this process, the processor 210 gives weights to evaluation values for the respective regions so that reconstruction accuracy of the designated region improves. For example, in the example of Fig. 12, a weight of an evaluation value of the designated region is made relatively large, and a weight of an evaluation value of a region that has not been designated is made relatively small. For example, the error evaluation value can be expressed by the following formula where a and b are coefficients ($a > b$).

$$\text{evaluation value} = a \times \text{the evaluation value of the region A} + b \times \text{the evaluation value of the region B}$$

As a result, an error in the region B does not affect the evaluation value much, and an error in the region A markedly affects the evaluation value. The coefficient a can be set to a value larger than the coefficient b, for example, to a value 1.5, 2, or more times larger than the coefficient b. By such processing, reconstruction placing priority on reconstruction accuracy in a region where an important subject is present is performed.

In the example of Fig. 11, after it is determined in step S110 that the loop end condition is satisfied, it is determined whether or not an error evaluation value concerning an error between the reconstructed image and the reconstruction target image is larger than a threshold value (step S211). In a case where a result of the determination is Yes, the processor 210 causes a warning prompting the user to generate a target image again (for example, enter the first parameter group again) or change the optimization loop end condition to be displayed on the display device 520 (step S212).

Fig. 13 illustrates an example of the displayed warning. In this example, a message "ERROR OF RECONSTRUCTED IMAGE EXCEEDS THRESHOLD VALUE. CHANGE PARAMETERS." is displayed. When the user presses the OK button, a screen for changing the parameters is displayed.

Fig. 14 illustrates an example of a GUI for changing parameters. In this example, an error image is displayed in addition to the target image and the reconstructed image after optimization. The error image is an image indicative of a degree of matching between the target image and the reconstructed image, and can be, for example, a difference image, a square error image, or a spectral angle distribution image. Note that in a case where a hyperspectral image is generated, the target image and the reconstructed image each include images corresponding to wavelength bands, but only an image corresponding to a single wavelength band is illustrated in Fig. 14. Images corresponding to wavelength bands may be displayed. The user can change the first parameters for generating the target image and the optimization loop end condition of the reconstructed image while seeing the error image. This makes it possible to change the first parameters and the optimization loop end condition so that an error in a region of an important subject is made as small as possible.

As described above, in the present modification, the processor 210 repeats the correcting the second parameter group on the basis of the reconstruction target image and the reconstructed image and the generating the reconstructed image by using the corrected second parameter group a predetermined number of times unless the end condition is satisfied. The processor 210 calculates an error evaluation value concerning an error between the reconstructed image and the reconstruction target image after the predetermined number of times of repetition. In a case where the error evaluation value is larger than a threshold value, the processor 210 causes a GUI prompting a user to perform at least one of re-entry of the first parameter group, change of the predetermined number of times, or change of the end condition to be displayed on the display device 520. This makes it possible to generate a more suitable reconstructed image by generating the reconstruction target image again by using the first parameter group having a more appropriate value, changing the predetermined number of times, or changing the end condition in a case where the difference between the reconstructed image and the reconstruction target image is large.

The processor 210 extracts a first region from the reconstruction target image, extracts a second region corresponding to the first region from the reconstructed image, and decides an error evaluation value on the basis of a difference between the first region and the second region. The first region can be, for example, designated by a user. This makes it possible to optimize the second parameter group, for example, so that a reconstructed image whose error in a region of high importance is small is generated.

Although a hyperspectral image is generated from a compressed image in the present embodiment, a range of application of the technique of the present disclosure is not limited to generation of a hyperspectral image. For example, the technique of the present disclosure is applicable to generation of a higher-resolution reconstructed image from a low-resolution compressed image, generation of an MRI image from a compressed image, generation of a three-dimensional image from a compressed image, and the like.

[5. Appendix]

The following technique is disclosed by the above description of the embodiment.

(Technique 1)

A signal processing method performed by using a computer, the signal processing method including:

acquiring a compressed image including compressed information of a subject;
acquiring a first parameter group and a reconstruction matrix used in first reconstruction processing for generating a reconstruction target image from the compressed image;
generating the reconstruction target image on the basis of the compressed image, the first parameter group, and the reconstruction matrix;
acquiring a second parameter group used in second reconstruction processing for generating a reconstructed image from the compressed image;
generating the reconstructed image on the basis of the compressed image, the second parameter group, and the reconstruction matrix; and
correcting the second parameter group on the basis of the reconstruction target image and the reconstructed image.

According to this configuration, the second parameter group can be corrected properly and efficiently. As a result, quality of a reconstructed image generated by the second reconstruction processing can be improved.

(Technique 2)

The method according to technique 1, in which
the second parameter group includes a larger number of parameters than the first parameter group.

According to this configuration, it is possible to properly and efficiently correct the second parameter group including a larger number of parameters than the first parameter group.

(Technique 3)

The method according to technique 1 or 2, in which
the correcting the second parameter group includes correcting one or more values corresponding to one or more parameters included in the second parameter group so that the reconstructed image approaches the reconstruction target image.

According to this configuration, it is possible to properly correct the second parameter group and generate a reconstructed image close to a reconstruction target image.

(Technique 4)

The method according to technique 3, in which
the correcting the second parameter group includes finding an error evaluation value concerning an error between the target reconstruction image and the reconstructed image and correcting the one or more values corresponding to the one or more parameters included in the second parameter group so that the error evaluation value is minimized.

According to this configuration, it is possible to properly correct the second parameter group and generate a reconstructed image having a small error.

(Technique 5)

The method according to any one of techniques 1 to 4, in which

the first reconstruction processing is performed by the first algorithm,
the second reconstruction processing is performed by the second algorithm, and
the second algorithm is an algorithm of a smaller computation load than the first algorithm.

According to this configuration, it is possible to generate a reconstructed image in a shorter time by using the second algorithm of a smaller computation amount than the first algorithm.

(Technique 6)

The method according to technique 5, in which

the first reconstruction processing does not include processing based on a trained model trained through machine learning, and
the second reconstruction processing includes processing based on a trained model trained through machine learning.

According to this configuration, it is possible to generate a reconstructed image in a shorter time by the second reconstruction processing including processing based on a trained model.

(Technique 7)

The method according to technique 6, in which
the first reconstruction processing includes iterative operation that minimizes or maximizes an evaluation function based on the compressed image and the reconstruction matrix.
According to this configuration, it is possible to generate a more accurate reconstruction target image, and it is therefore possible to correct the second parameter group to a more appropriate value.

(Technique 8)

The method according to any one of techniques 1 to 7, in which

the compressed image is an image in which spectral information of the subject is coded, and
the reconstruction target image and the reconstructed image each include information on images corresponding to wavelength bands.

According to this configuration, it is possible to properly generate a reconstructed image including information on images corresponding to wavelength bands.

(Technique 9)

The method according to any one of techniques 1 to 8, further including deciding a final value of the second parameter group by repeating the correcting the second parameter group on the basis of the reconstruction target image and the reconstructed image and generating the reconstructed image by using the corrected second parameter group plural times.
According to this configuration, it is possible to correct the second parameter group to a more appropriate value, and it is therefore possible to improve accuracy of a reconstructed image.

(Technique 10)

The method according to any one of techniques 1 to 9, further including displaying, on a display device, a graphical user interface (GUI) for allowing a user to enter the first parameter group.
According to this configuration, the user can adjust the first parameter group, and it is therefore possible to generate a more appropriate reconstruction target image. As a result, it is possible to correct the second parameter group to a more appropriate value and improve accuracy of a reconstructed image.

(Technique 11)

The method according to technique 10, further including:

repeating the correcting the second parameter group on the basis of the reconstruction target image and the reconstructed image and the generating the reconstructed image by using the corrected second parameter group a predetermined number of times unless an end condition is satisfied;
calculating an error evaluation value concerning an error between the reconstructed image after the predetermined number of times of repetition and the reconstruction target image; and
displaying, on the display device, a GUI that prompts the user to perform at least one of re-entry of the first parameter group, change of the predetermined number of times, or change of the end condition in a case where the error evaluation value is larger than a threshold value.

According to this configuration, it is possible to correct the second parameter group to a more appropriate value. As a result, it is possible to generate a more accurate reconstructed image.

(Technique 12)

The method according to technique 11, in which
the calculating the error evaluation value includes extracting a first region from the reconstruction target image, extracting a second region corresponding to the first region from the reconstructed image, and deciding the error evaluation value on the basis of a difference between the first region and the second region.
According to this configuration, it is possible to reduce a reconstruction error concerning a subject included in the extracted region.

(Technique 13)

A signal processing apparatus including:

one or more processors; and
a memory in which a computer program to be executed by the one or more processors is stored, in which
the computer program causes the one or more processors to:

acquire a compressed image including compressed information of a subject,
acquire a first parameter group and a reconstruction matrix used in first reconstruction processing for generating a reconstruction target image from the compressed image,
generate the reconstruction target image on the basis of the compressed image, the first parameter group, and the reconstruction matrix,
acquire a second parameter group used in second reconstruction processing for generating a reconstructed image from the compressed image,
generate the reconstructed image on the basis of the compressed image, the second parameter group, and the reconstruction matrix; and
correct the second parameter group on the basis of the reconstruction target image and the reconstructed image.

According to this configuration, it is possible to properly and efficiently correct the second parameter group. As a result, it is possible to improve quality of a reconstructed image generated by the second reconstruction processing.

(Other Remarks)

A modification of the embodiment of the present disclosure may be as follows.
A method according to a first item is a method performed by a computer, and the method includes causing a computer to:

(a) receive a first image of a subject imaged through a filter array including four or more filters, the four or more filters corresponding to four or more optical spectra on a one-to-one basis and the four or more optical spectra being different from one another,
(b) decide first pixel values of a first reconstruction target image corresponding to a first wavelength region to n-th pixel values of an n-th reconstruction target image corresponding to an n-th wavelength region on the basis of a reconstruction matrix corresponding to the filter array and pixel values of the first image,
(c) decide weight values of a neural network on the basis of the pixel values of the first image and the first pixels values to the n-th pixel values,

each of the weight values corresponding to two units that are directly connected, and the neural network including the two units,
the first pixels values to the n-th pixel values being used as training data for output values that are output by the neural network in a case where the pixel values of the first image are input to the neural network, and

(d) generate an image of a second subject corresponding to the first wavelength region to an image of the second subject corresponding to the n-th wavelength region on the basis of output values that are output from the neural network in response to input values to the neural network,

the input values being pixel values of an image of the second subject imaged through the filter array, and
the neural network generating the output values by using the input values and the decided weight values and without using the reconstruction matrix.

Industrial Applicability

The technique of the present disclosure is useful, for example, for a camera and a measurement device that acquires a multiwavelength or high-resolution image. The technique of the present disclosure is, for example, applicable to sensing for a biological, medical, or cosmetic purpose, a food foreign substance or residual pesticide test system, a remote sensing system, and an on-vehicle sensing system.

Reference Signs List

100 imaging device
110 filter array
140 optical system
160 image sensor
200 signal processing apparatus
210 processor
250 memory
300 display device
400 conveyor
500 terminal device
510 input device
520 display device
1000 imaging system

## Claims

**1.** A signal processing method performed by using a computer, the signal processing method comprising:

acquiring a compressed image including compressed information of a subject;
acquiring a first parameter group and a reconstruction matrix used in first reconstruction processing for generating a reconstruction target image from the compressed image;
generating the reconstruction target image on a basis of the compressed image, the first parameter group, and the reconstruction matrix;
acquiring a second parameter group used in second reconstruction processing for generating a reconstructed image from the compressed image;
generating the reconstructed image on a basis of the compressed image, the second parameter group, and the reconstruction matrix; and
correcting the second parameter group on a basis of the reconstruction target image and the reconstructed image.

**2.** The method according to claim 1, wherein
the second parameter group includes a larger number of parameters than the first parameter group.

**3.** The method according to claim 1 or 2, wherein
the correcting the second parameter group includes correcting one or more values corresponding to one or more parameters included in the second parameter group so that the reconstructed image approaches the reconstruction target image.

**4.** The method according to claim 3, wherein
the correcting the second parameter group includes finding an error evaluation value concerning an error between the target reconstruction image and the reconstructed image and correcting the one or more values corresponding to the one or more parameters included in the second parameter group so that the error evaluation value is minimized.

**5.** The method according to claim 1 or 2, wherein

the first reconstruction processing is performed by the first algorithm,
the second reconstruction processing is performed by the second algorithm, and
the second algorithm is an algorithm of a smaller computation load than the first algorithm.

**6.** The method according to claim 5, wherein

the first reconstruction processing does not include processing based on a trained model trained through machine learning, and
the second reconstruction processing includes processing based on a trained model trained through machine learning.

**7.** The method according to claim 6, wherein
the first reconstruction processing includes iterative operation that minimizes or maximizes an evaluation function based on the compressed image and the reconstruction matrix.

**8.** The method according to claim 1 or 2, wherein

the compressed image is an image in which spectral information of the subject is coded, and
the reconstruction target image and the reconstructed image each include information on images corresponding to wavelength bands.

**9.** The method according to claim 1 or 2, further comprising deciding a final value of the second parameter group by repeating the correcting the second parameter group on a basis of the reconstruction target image and the reconstructed image and generating the reconstructed image by using the corrected second parameter group plural times.

**10.** The method according to claim 1 or 2, further comprising displaying, on a display device, a graphical user interface (GUI) for allowing a user to enter the first parameter group.

**11.** The method according to claim 10, further comprising:

repeating the correcting the second parameter group on a basis of the reconstruction target image and the reconstructed image and the generating the reconstructed image by using the corrected second parameter group a predetermined number of times unless an end condition is satisfied;
calculating an error evaluation value concerning an error between the reconstructed image after the predetermined number of times of repetition and the reconstruction target image; and
displaying, on the display device, a GUI that prompts the user to perform at least one of re-entry of the first parameter group, change of the predetermined number of times, or change of the end condition in a case where the error evaluation value is larger than a threshold value.

**12.** The method according to claim 11, wherein
the calculating the error evaluation value includes extracting a first region from the reconstruction target image, extracting a second region corresponding to the first region from the reconstructed image, and deciding the error evaluation value on a basis of a difference between the first region and the second region.

**13.** A signal processing apparatus comprising:

one or more processors; and
a memory in which a computer program to be executed by the one or more processors is stored, wherein
the computer program causes the one or more processors to:

acquire a compressed image including compressed information of a subject,
acquire a first parameter group and a reconstruction matrix used in first reconstruction processing for generating a reconstruction target image from the compressed image,
generate the reconstruction target image on a basis of the compressed image, the first parameter group, and the reconstruction matrix,
acquire a second parameter group used in second reconstruction processing for generating a reconstructed image from the compressed image,
generate the reconstructed image on a basis of the compressed image, the second parameter group, and the reconstruction matrix; and
correct the second parameter group on a basis of the reconstruction target image and the reconstructed image.

FIG. 1

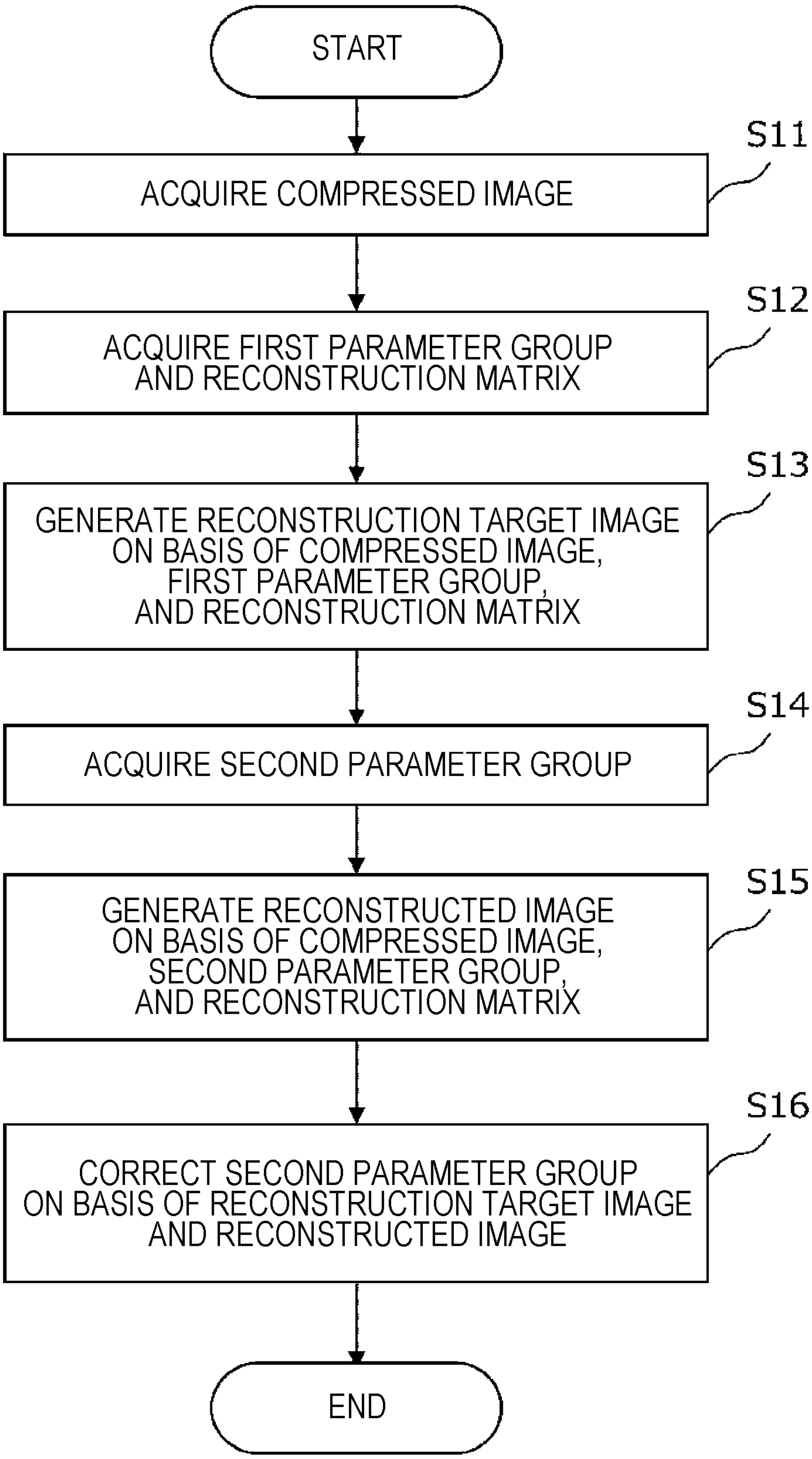
START
S11
ACQUIRE COMPRESSED IMAGE
S12
ACQUIRE FIRST PARAMETER GROUP AND RECONSTRUCTION MATRIX
S13
GENERATE RECONSTRUCTION TARGET IMAGE ON BASIS OF COMPRESSED IMAGE, FIRST PARAMETER GROUP, AND RECONSTRUCTION MATRIX
S14
ACQUIRE SECOND PARAMETER GROUP
S15
GENERATE RECONSTRUCTED IMAGE ON BASIS OF COMPRESSED IMAGE, SECOND PARAMETER GROUP, AND RECONSTRUCTION MATRIX
S16
CORRECT SECOND PARAMETER GROUP ON BASIS OF RECONSTRUCTION TARGET IMAGE AND RECONSTRUCTED IMAGE
END

FIG. 2A

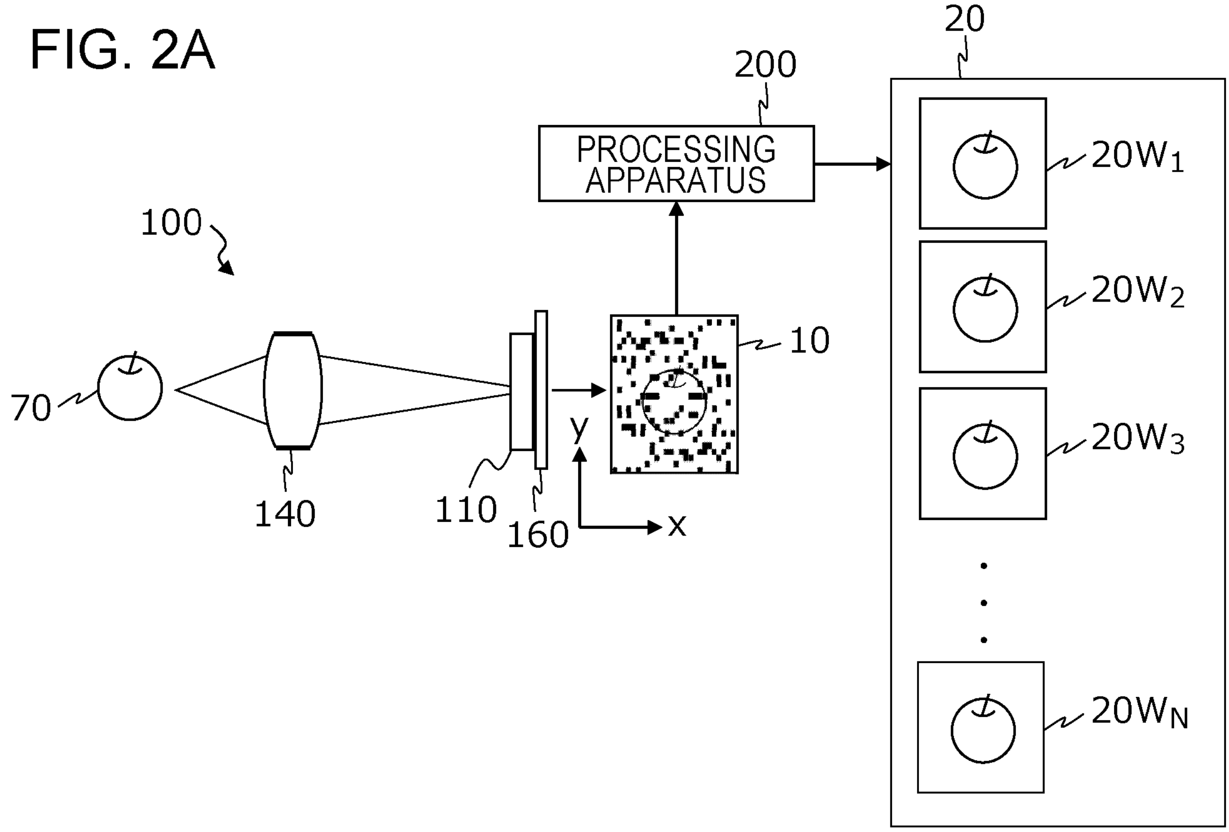
20
200
PROCESSING APPARATUS
20W1
100
20W2
10
70
20W3
140
110
160
y
x
20WN

FIG. 2B

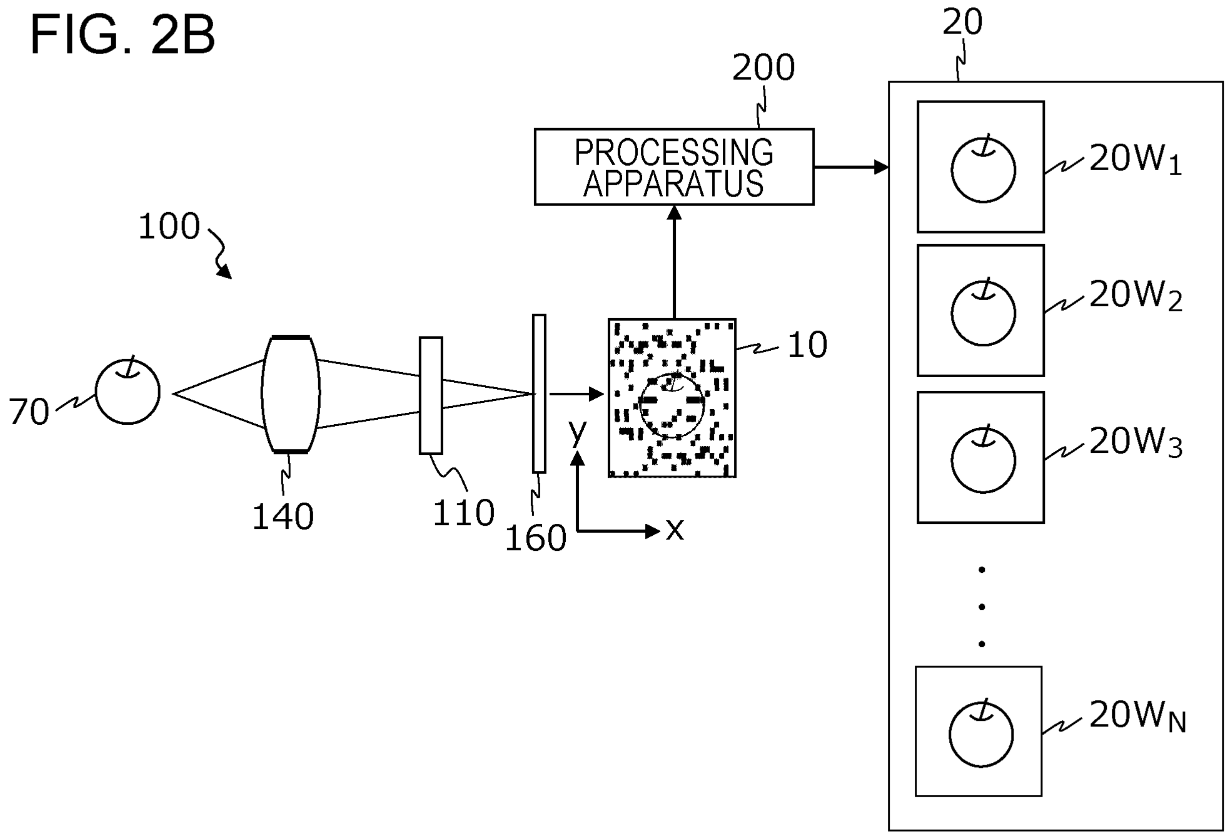
20
200
PROCESSING APPARATUS
20W1
100
20W2
10
70
20W3
140
110
160
y
x
20WN

FIG. 2C

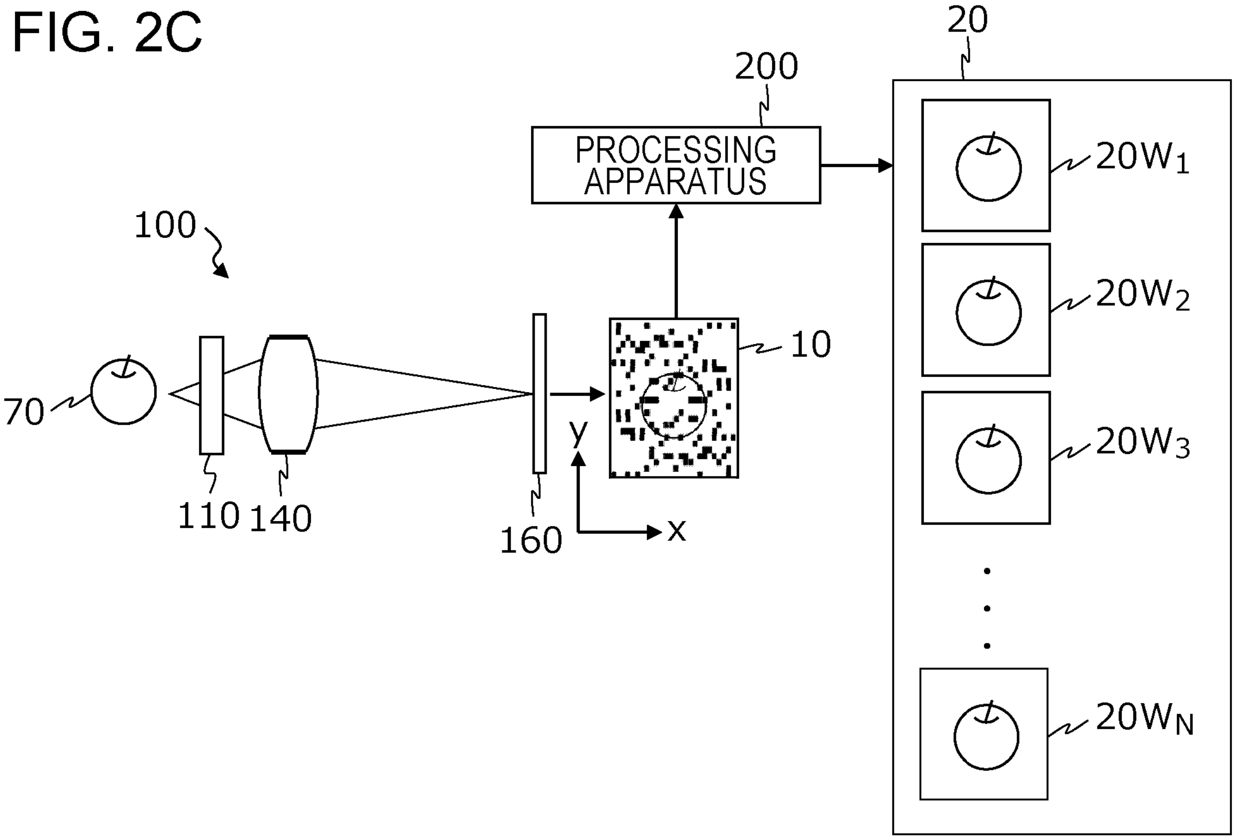
20
200
PROCESSING APPARATUS
20W1
20W2
20W3
20WN
100
10
70
110
140
160
y
x

FIG. 2D

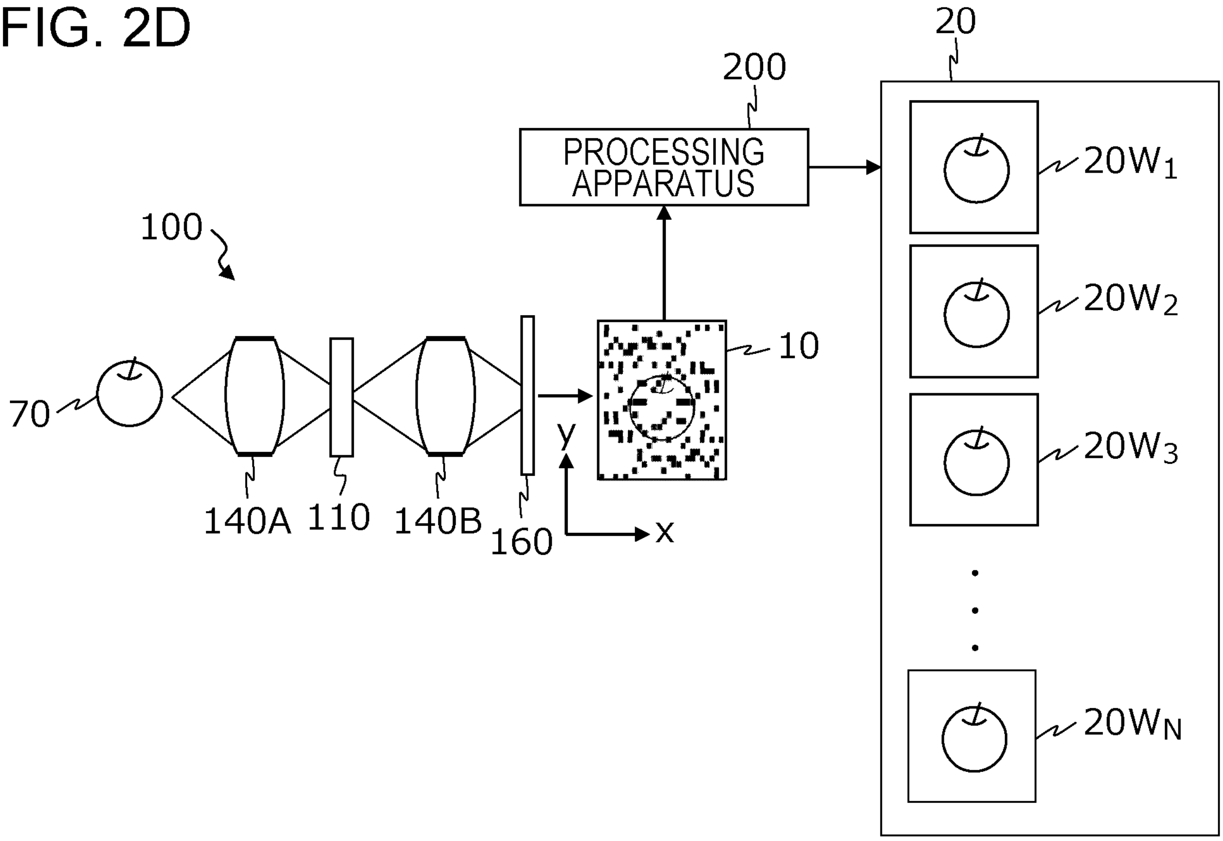
20
200
PROCESSING APPARATUS
20W1
20W2
20W3
20WN
100
10
70
140A
110
140B
160
y
x

FIG. 3A

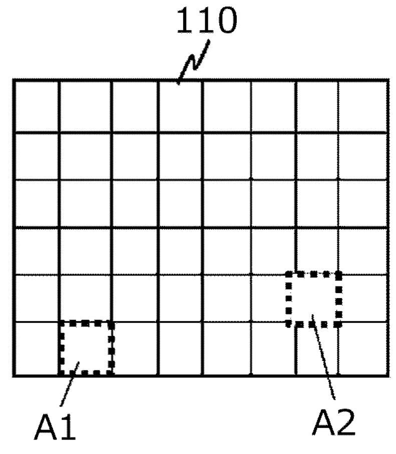


FIG. 3B

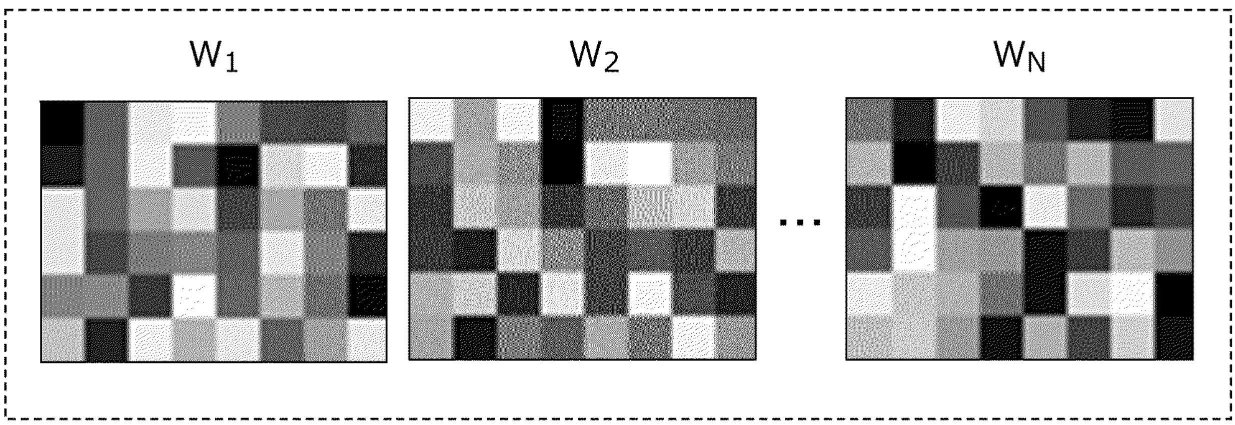


FIG. 3C

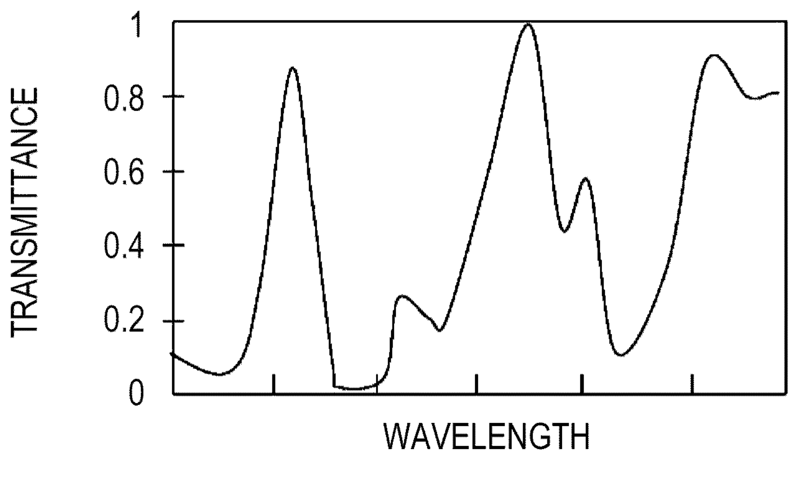

FIG. 3D

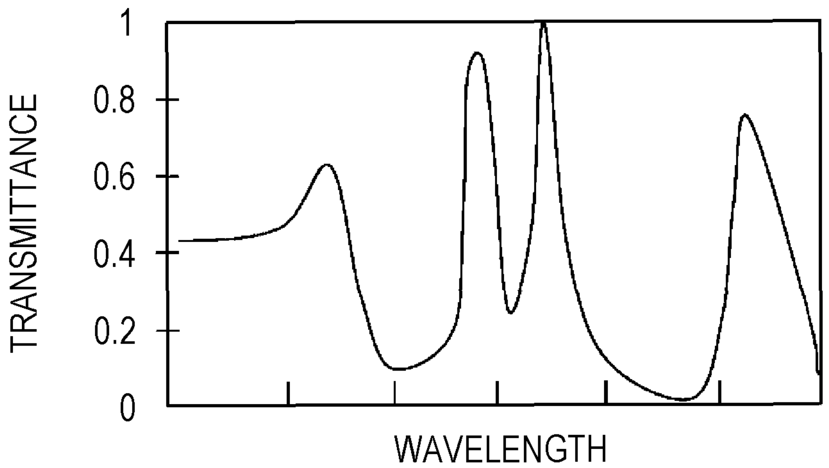


FIG. 4A

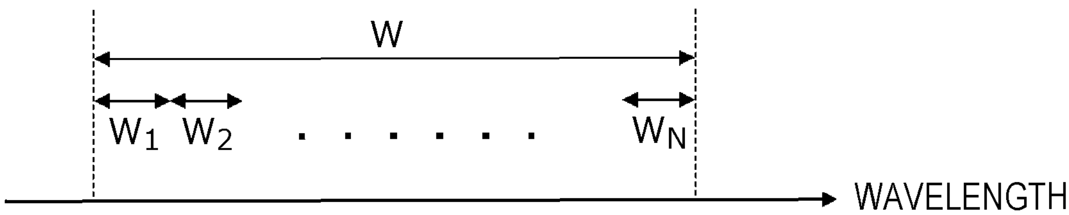


FIG. 4B

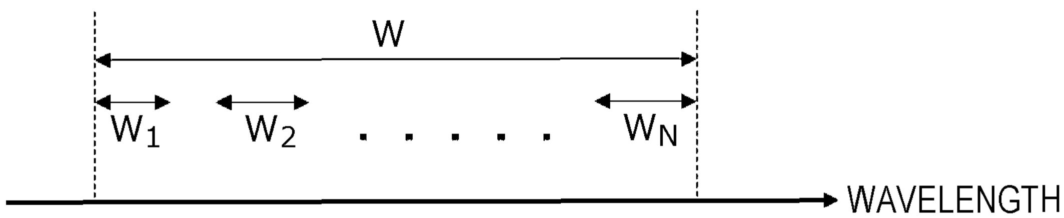

FIG. 5

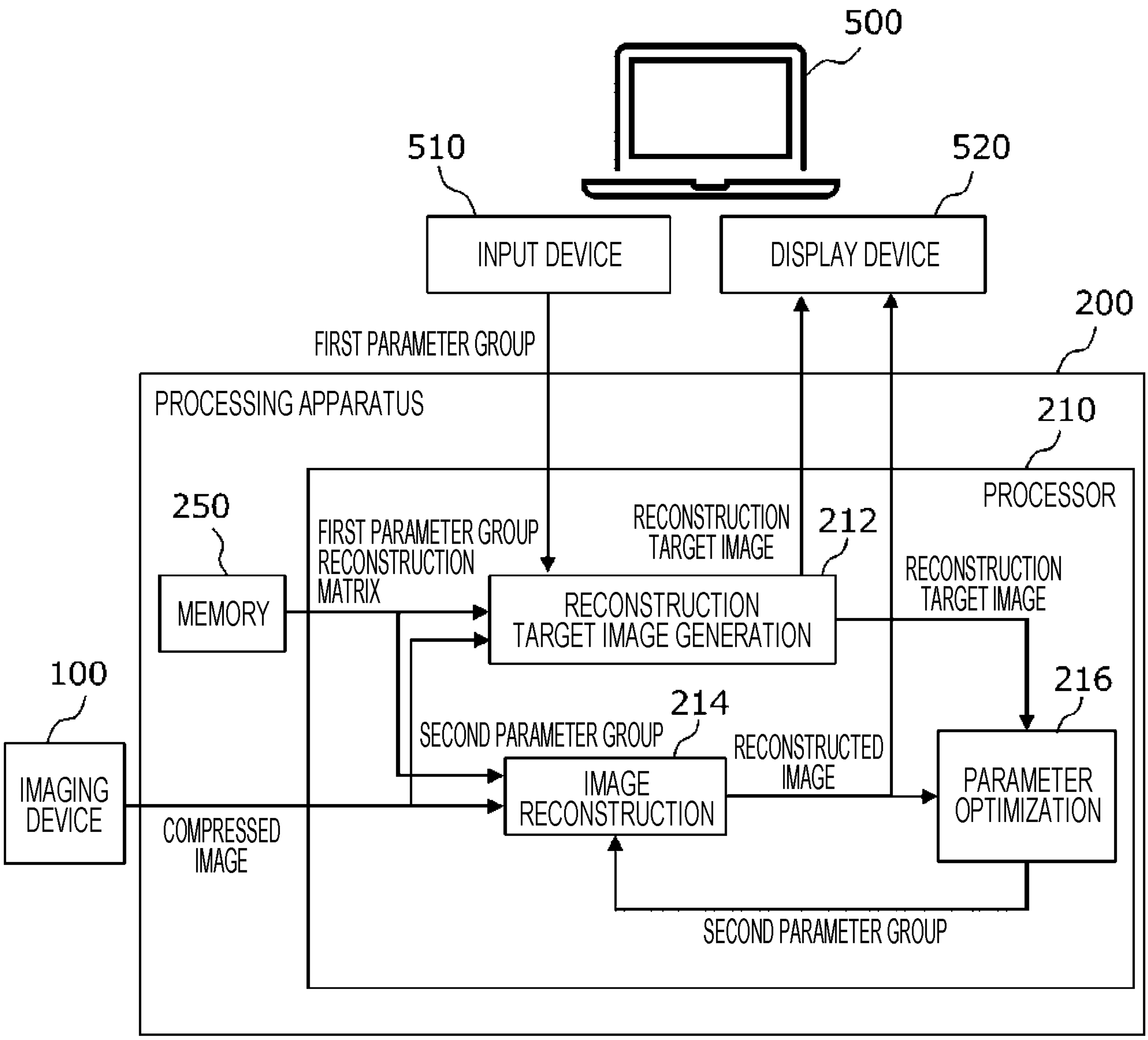
500
510
520
INPUT DEVICE
DISPLAY DEVICE
200
FIRST PARAMETER GROUP
PROCESSING APPARATUS
210
PROCESSOR
250
FIRST PARAMETER GROUP
RECONSTRUCTION
MATRIX
RECONSTRUCTION
TARGET IMAGE
212
RECONSTRUCTION
TARGET IMAGE
MEMORY
RECONSTRUCTION
TARGET IMAGE GENERATION
100
216
214
SECOND PARAMETER GROUP
RECONSTRUCTED
IMAGE
IMAGING
DEVICE
IMAGE
RECONSTRUCTION
PARAMETER
OPTIMIZATION
COMPRESSED
IMAGE
SECOND PARAMETER GROUP

# FIG. 6

**■ FIRST RECONSTRUCTION PROCESSING:**
**RECURSIVE ITERATIVE OPERATION (COMPRESSED SENSING)**

$$\underset{f}{\operatorname{argmin}}(\|g - Hf\|^2 + \tau\Phi(f))$$

g: ACQUIRED DATA (COMPRESSED IMAGE)
H: RECONSTRUCTION MATRIX
f: RECONSTRUCTION TARGET IMAGE
Φ: REGULARIZATION TERM

FIRST PARAMETERS (SEVERAL)
- NUMBER OF TIMES OF REPETITION
- REGULARIZATION COEFFICIENT (τ)

**■ SECOND RECONSTRUCTION PROCESSING:**
**MACHINE LEARNING (e.g., DEEP LEARNING)**

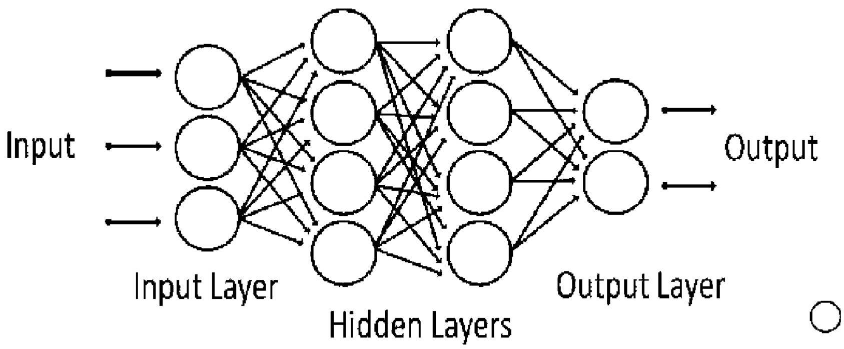


○ : NODE

$$\underset{\theta}{\operatorname{argmin}}(\|f - \varphi(g, H, \theta)\|^2)$$

f: RECONSTRUCTION TARGET IMAGE
g: ACQUIRED DATA (COMPRESSED IMAGE)
H: RECONSTRUCTION MATRIX
φ: RECONSTRUCTED IMAGE (MACHINE LEARNING ALGORITHM)
θ: WEIGHTS OF NODES

SECOND PARAMETERS (SEVERAL HUNDREDS OR MORE)
- WEIGHTS OF NODES
- HYPER PARAMETER IN LEARNING
  - NUMBER OF TIMES OF LEARNING
  - LEARNING RATE
  - LEARNING ALGORITHM

FIG. 7

■ FIRST RECONSTRUCTION PROCESSING:
RECURSIVE ITERATIVE OPERATION (COMPRESSED SENSING ALGORITHM 1)

$$\underset{f}{\operatorname{argmin}}(\|g - Hf\|^2 + \tau_1\Phi_1(f))$$

$$f_1^{k+1} = \Psi_1(f_1^k, H, g, p_1, \dots, p_n)$$

$g$ : ACQUIRED DATA (COMPRESSED IMAGE)
$H$ : RECONSTRUCTION MATRIX
$f_1$ : RECONSTRUCTION TARGET IMAGE
$\Phi_1$ : REGULARIZATION TERM
$\tau_1$ : REGULARIZATION COEFFICIENT
$\Psi_1$ : ITERATIVE OPERATION FUNCTION
$p_1, \cdots, p_n$ : PARAMETERS OF ITERATIVE OPERATION FUNCTION

■ SECOND RECONSTRUCTION PROCESSING:
RECURSIVE ITERATIVE OPERATION (COMPRESSED SENSING ALGORITHM 2)

$$\underset{f}{\operatorname{argmin}}(\|g - Hf\|^2 + \tau_2\Phi_2(f))$$

$$f_2^{k+1} = \Psi_2(f_2^k, H, g, q_1, \dots, q_m)$$

$$\underset{q}{\operatorname{argmin}}(\|f_1 - f_2\|^2)$$

$g$ : ACQUIRED DATA (COMPRESSED IMAGE)
$H$ : RECONSTRUCTION MATRIX
$f_2$ : RECONSTRUCTED IMAGE
$\Phi_2$ : REGULARIZATION TERM
$\tau_2$ : REGULARIZATION COEFFICIENT
$\Psi_2$ : ITERATIVE OPERATION FUNCTION
$q_1, \cdots, q_m$ : PARAMETERS OF ITERATIVE OPERATION FUNCTION ($n < m$)

FIG. 8

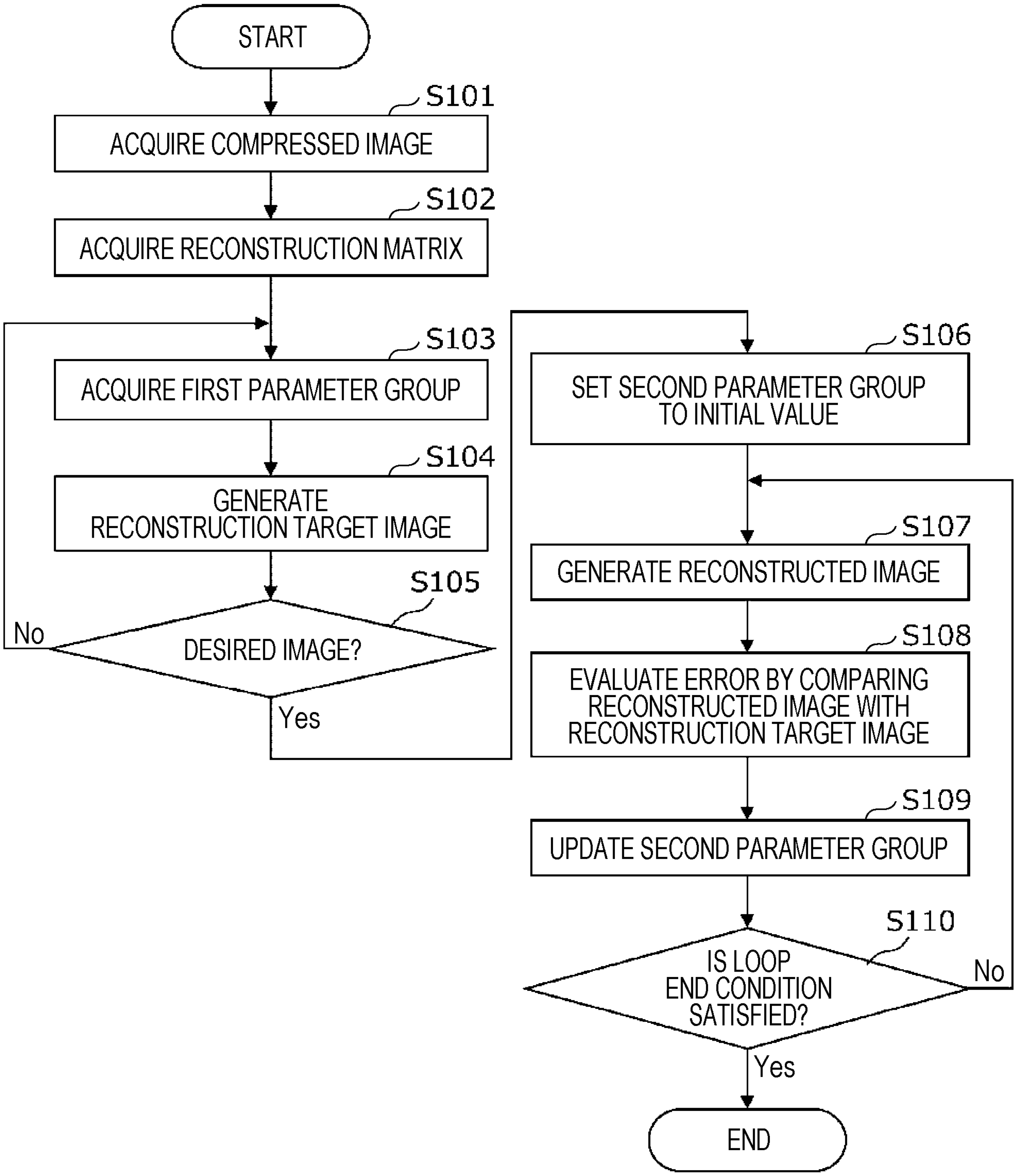
START
S101
ACQUIRE COMPRESSED IMAGE
S102
ACQUIRE RECONSTRUCTION MATRIX
S103
ACQUIRE FIRST PARAMETER GROUP
S104
GENERATE RECONSTRUCTION TARGET IMAGE
S105
DESIRED IMAGE?
No
Yes
S106
SET SECOND PARAMETER GROUP TO INITIAL VALUE
S107
GENERATE RECONSTRUCTED IMAGE
S108
EVALUATE ERROR BY COMPARING RECONSTRUCTED IMAGE WITH RECONSTRUCTION TARGET IMAGE
S109
UPDATE SECOND PARAMETER GROUP
S110
IS LOOP END CONDITION SATISFIED?
No
Yes
END

FIG. 9

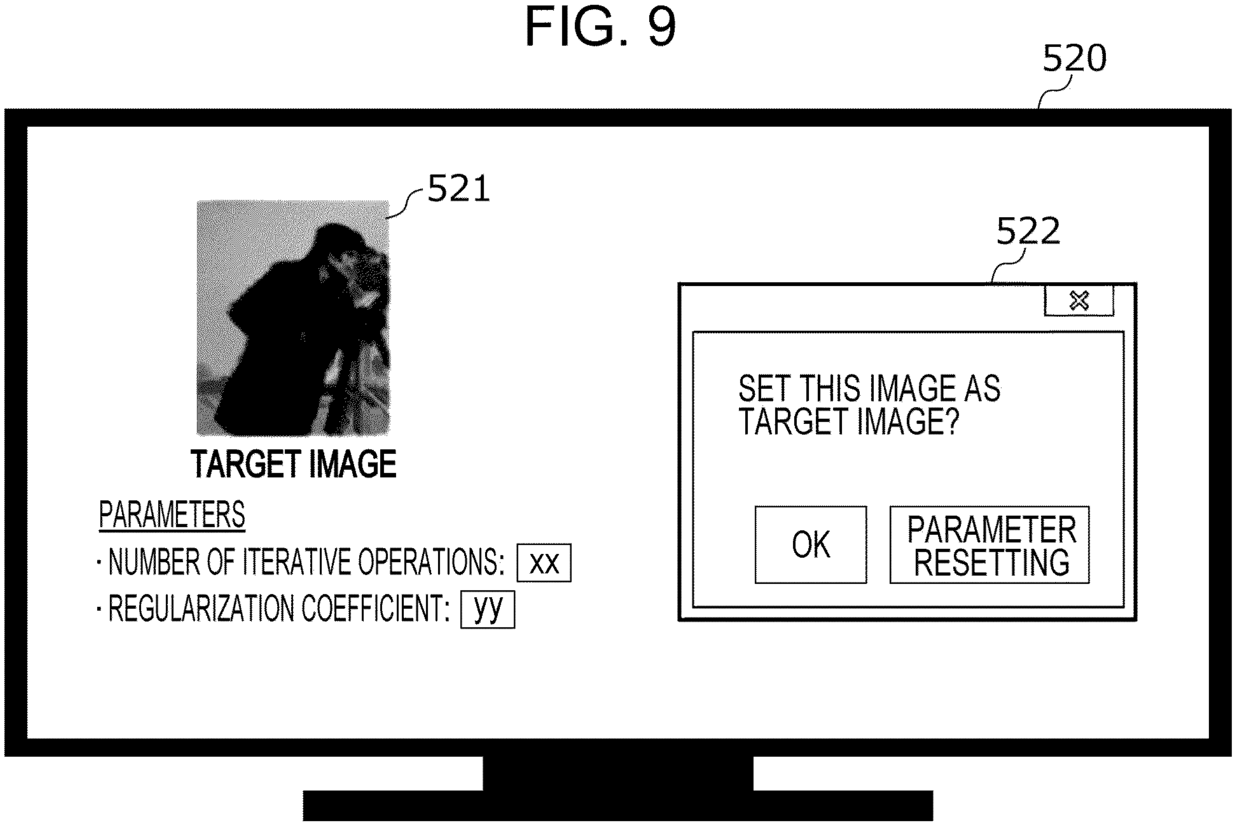
520
521
522
TARGET IMAGE
PARAMETERS
· NUMBER OF ITERATIVE OPERATIONS: xx
· REGULARIZATION COEFFICIENT: yy
SET THIS IMAGE AS TARGET IMAGE?
OK
PARAMETER RESETTING

FIG. 10

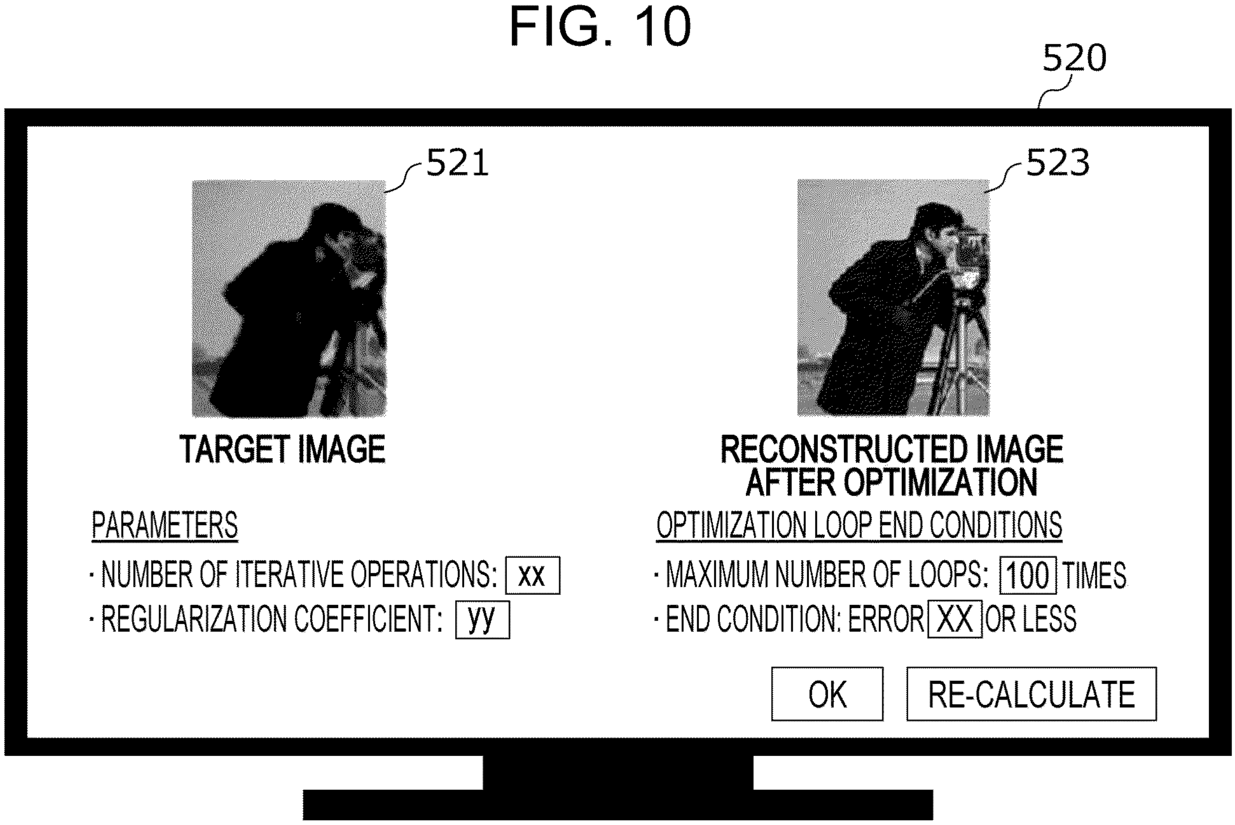
520
521
523
TARGET IMAGE
PARAMETERS
· NUMBER OF ITERATIVE OPERATIONS: xx
· REGULARIZATION COEFFICIENT: yy
RECONSTRUCTED IMAGE AFTER OPTIMIZATION
OPTIMIZATION LOOP END CONDITIONS
· MAXIMUM NUMBER OF LOOPS: 100 TIMES
· END CONDITION: ERROR XX OR LESS
OK
RE-CALCULATE

FIG. 11

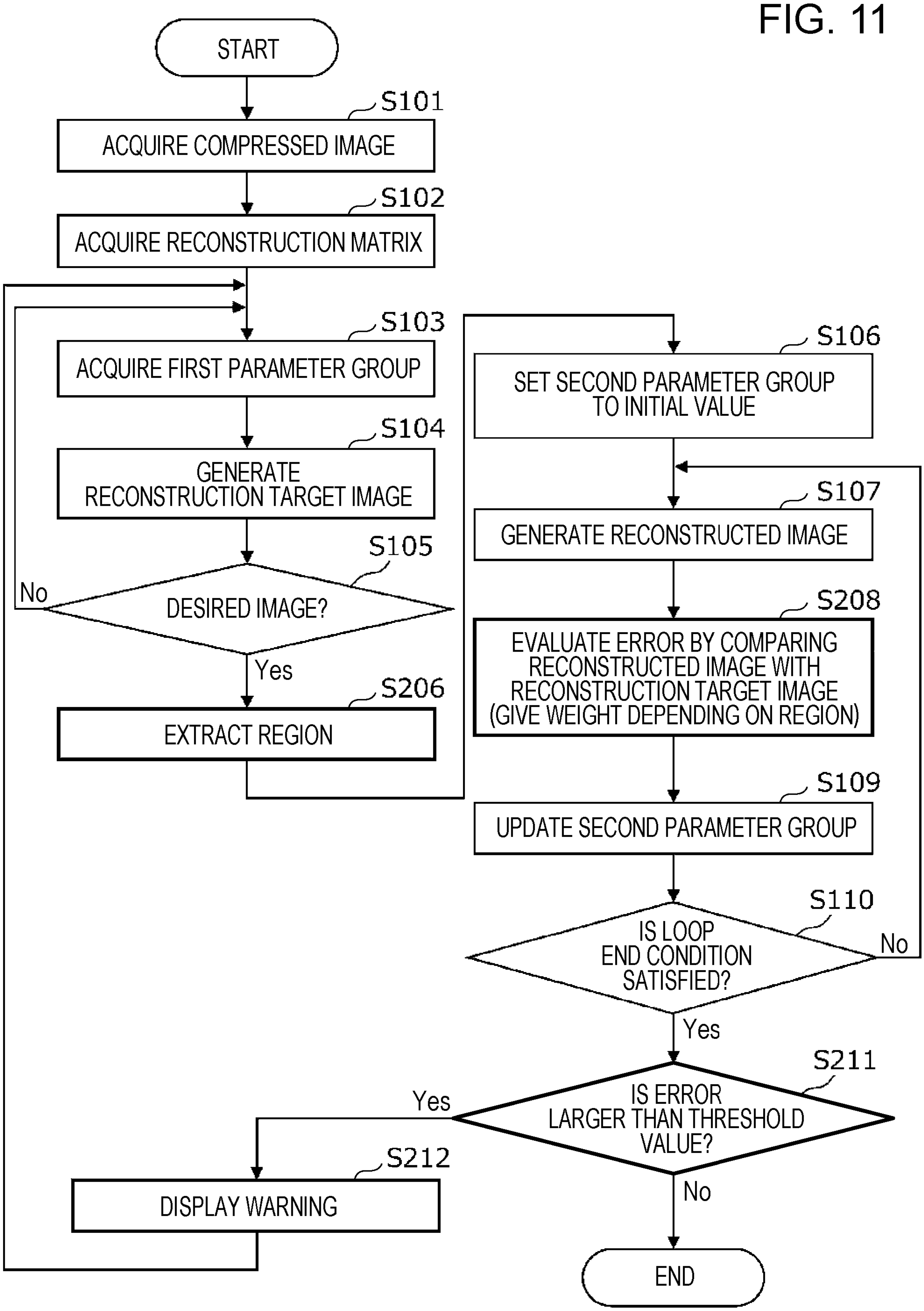
START
S101
ACQUIRE COMPRESSED IMAGE
S102
ACQUIRE RECONSTRUCTION MATRIX
S103
ACQUIRE FIRST PARAMETER GROUP
S104
GENERATE RECONSTRUCTION TARGET IMAGE
S105
DESIRED IMAGE?
No
Yes
S206
EXTRACT REGION
S106
SET SECOND PARAMETER GROUP TO INITIAL VALUE
S107
GENERATE RECONSTRUCTED IMAGE
S208
EVALUATE ERROR BY COMPARING RECONSTRUCTED IMAGE WITH RECONSTRUCTION TARGET IMAGE (GIVE WEIGHT DEPENDING ON REGION)
S109
UPDATE SECOND PARAMETER GROUP
S110
IS LOOP END CONDITION SATISFIED?
No
Yes
S211
IS ERROR LARGER THAN THRESHOLD VALUE?
Yes
No
S212
DISPLAY WARNING
END

FIG. 12

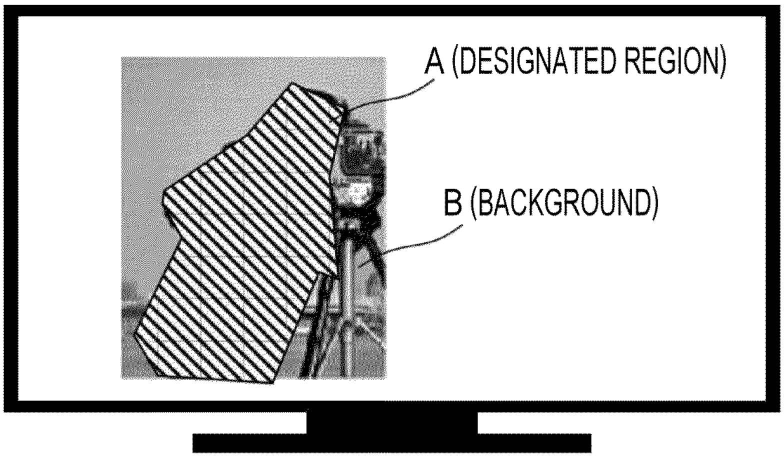


FIG. 13

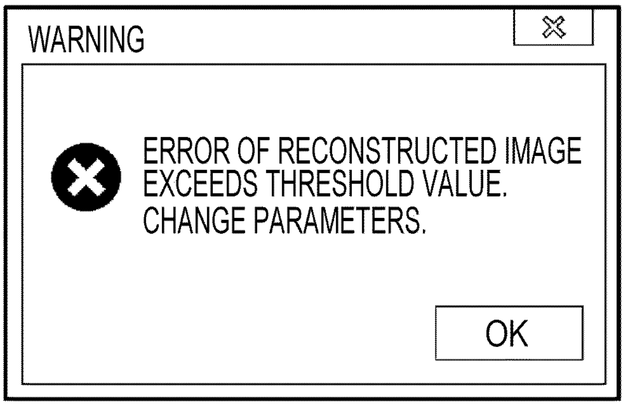


FIG. 14

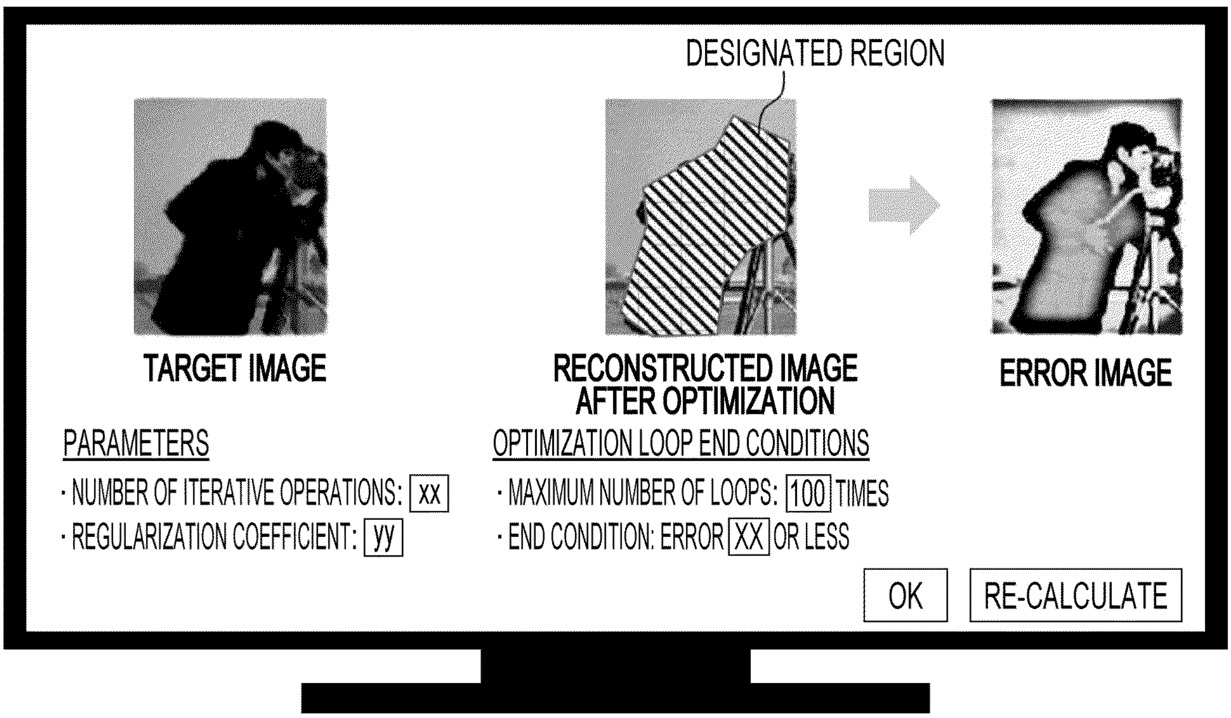

FIG. 15

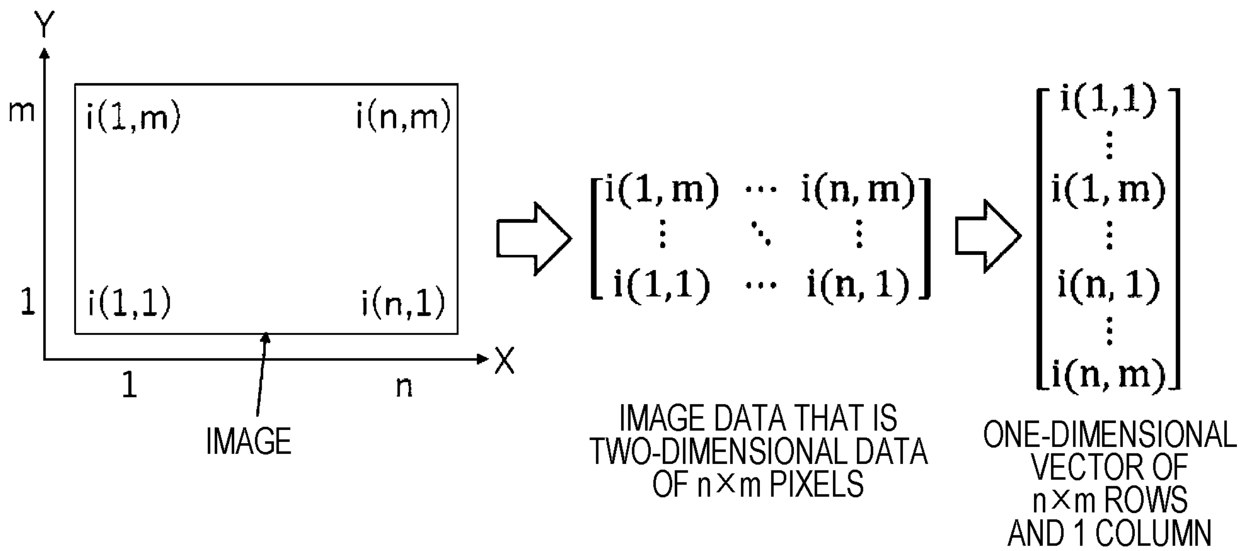
Y
m
1
i(1,m)
i(n,m)
i(1,1)
i(n,1)
X
1
n
IMAGE
i(1, m) ⋯ i(n, m)
i(1,1) ⋯ i(n, 1)
IMAGE DATA THAT IS TWO-DIMENSIONAL DATA OF n×m PIXELS
i(1,1)
i(1, m)
i(n, 1)
i(n, m)
ONE-DIMENSIONAL VECTOR OF n×m ROWS AND 1 COLUMN

**INTERNATIONAL SEARCH REPORT**

International application No.
**PCT/JP2023/027993**

**A. CLASSIFICATION OF SUBJECT MATTER**

***G06T 1/40***(2006.01)i; ***G01J 3/36***(2006.01)i; ***G06N 20/00***(2019.01)i; ***H04N 23/60***(2023.01)i
FI: G06T1/40; G01J3/36; G06N20/00 130; H04N23/60 500

According to International Patent Classification (IPC) or to both national classification and IPC

**B. FIELDS SEARCHED**

Minimum documentation searched (classification system followed by classification symbols)

G06T1/40; G01J3/36; G06N20/00; H04N23/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/234797 A1 (NIPPON TELEGRAPH AND TELEPHONE CORPORATION) 25 November 2021 (2021-11-25)<br>entire text | 1-13 |
| A | JP 2016-156801 A (PANASONIC IP MAN CORP) 01 September 2016 (2016-09-01)<br>entire text | 1-13 |
| A | 吉田道隆 他４名, Ｄｅｅｐ Ｌｅａｒｎｉｎｇによる圧縮ビデオセンシングの再構成, 情報処理学会 研究報告 コンピュータビジョンとイメージメディア（ＣＶＩＭ）, 08 September 2017, 2017-CVIM-208, pp. 1-8<br>entire text, (YOSHIDA, Michitaka et al. Reconstruction of compressed video sensing by Deep Learning. IPSJ SIG Technical Report: Computer Vision and Image Media (CVIM).) | 1-13 |
| A | WANG, Lizhi, et al. Hyperspectral Image Reconstruction Using a Deep Spatial-Spectral Prior. Proceedings of 2019 IEEE/CVF Conference on Computer Vision and Pattern Recognition (CVPR). 20 June 2019, pp. 8024-8033<br>the whole document | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/027993**

| Patent document cited in search report | Publication date (day/month/year) | Patent family member(s) | Publication date (day/month/year) |
|---|---|---|---|
| WO 2021/234797 A1 | 25 November 2021 | (Family: none) | |
| JP 2016-156801 A | 01 September 2016 | US 2016/0138975 A1<br>the whole document<br>CN 105611117 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9599511 B
- JP 2017208641 A
- US 20190340497